(19) Europäisches Patentamt / European Patent Office / Office européen des brevets

(11) **EP 2 511 494 A1**

## EUROPEAN PATENT APPLICATION
published in accordance with Art. 153(4) EPC

(43) Date of publication:
**17.10.2012 Bulletin 2012/42**

(21) Application number: **10835876.3**

(22) Date of filing: **01.12.2010**

(51) Int Cl.:
*F01N 3/30* (2006.01)   *B01D 53/86* (2006.01)
*F01N 3/22* (2006.01)   *F01N 5/04* (2006.01)
*F01N 13/08* (2010.01)

(86) International application number:
**PCT/JP2010/071488**

(87) International publication number:
**WO 2011/070955 (16.06.2011 Gazette 2011/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2009 JP 2009281823**

(71) Applicant: **Yamaha Hatsudoki Kabushiki Kaisha
Iwata-shi, Shizuoka 438-8501 (JP)**

(72) Inventor: **KONAKAWA, Tsugunori
Iwata-shi
Shizuoka 438-8501 (JP)**

(74) Representative: **Zimmermann, Tankred Klaus et al
Patentanwälte Schoppe, Zimmermann,
Stöckeler, Zinkler & Partner
Postfach 246
82043 Pullach (DE)**

(54) **ENGINE, AND VEHICLE AND SHIP THAT COMPRISE SAME**

(57) An engine includes an exhaust system having an exhaust passage for guiding exhaust gas discharged from a combustion chamber and an air supply system for supplying air. The exhaust passage is provided with a convergent portion, a divergent portion, and a branch portion. The branch portion divides a shock wave, which is propagating through the exhaust passage toward the downstream side, from the exhaust passage upstream of the divergent portion, and allows the shock wave to again propagate through the exhaust passage. The air supply system includes a first passage that is provided with a first reed valve through which an airflow running from an upstream end toward a downstream end passes and that has its downstream end connected to the exhaust passage located upstream of the divergent portion, and a second path that has its upstream end connected to the first passage located downstream of the first reed valve. The exhaust system is arranged to allow the exhaust gas to pass through the convergent portion and to collide, between the branch portion and the divergent portion, with a shock wave that has propagated through the branch portion.

FIG. 1

**Description**

TECHNICAL FIELD

The present invention relates to an engine (internal combustion engine), a vehicle provided with an engine, and a vessel provided with an engine.

BACKGROUND ART

An engine (internal combustion engine) is known which includes a catalyst that purifies exhaust gas and a secondary air supply system that supplies air to an exhaust passage. For example, in an engine of Patent Document 1, a three-way catalyst is provided in an exhaust passage. A secondary air supply system is connected to the exhaust passage so as to supply secondary air to the upstream side and the downstream side of the catalyst, respectively. The term "secondary air" denotes air that is supplied without passing through a combustion chamber of the engine. Although the catalyst functions chiefly as a reduction catalyst that reduces NOx, the catalyst functions also as an oxidation catalyst. In detail, secondary air supplied to the downstream side of the catalyst temporarily flows into the catalyst by means of the pulsation of exhaust gas, and then flows toward the downstream side. At this time, the catalyst purifies NOx, CO, and THC in the exhaust gas discharged from the engine by functioning as an oxidation catalyst that oxidizes CO and THC.
The engine of Patent Document 1 is arranged such that the secondary air supply system also supplies secondary air to the upstream side of the catalyst. The reason is that the amount of CO and THC contained in the exhaust gas increases when the air-fuel ratio between air and fuel to be supplied to the engine is set at the rich side, for example, in a high-speed/high-load operation. At this time, the catalyst can be allowed to function chiefly as an oxidation catalyst that oxidizes CO and THC by supplying secondary air to the upstream side of the catalyst.
In Patent Document 1, two methods are disclosed as a method of supplying secondary air to the downstream side of the catalyst. One of the methods is to provide a reed valve and to use exhaust pulsation in the exhaust passage. The other method is to provide an air pump instead of the reed valve and to forcibly supply secondary air to the exhaust passage.

PRIOR ART DOCUMENTS

PATENT DOCUMENTS

Patent Document 1: Japanese Unexamined Patent Application Publication No. 2006-220019

SUMMARY OF THE INVENTION

MEANS FOR SOLVING THE PROBLEMS

A comparison is made between the two methods of supplying secondary air to the downstream side of the catalyst.
The method of using exhaust pulsation differs from the method of using an air pump in that it has no need to drive the pump, and therefore is small in the loss of engine output. However, this method has the following problems. When the engine is driven at a high rotational speed or in a high-load state, the mean pressure in the exhaust passage becomes high. Additionally, the catalyst acts as a resistance in a part of the exhaust passage downstream of the catalyst, and therefore the amplitude of exhaust pulsation becomes small. The magnitude of the resistance caused by the catalyst becomes higher in proportion to an increase in the speed or the load of the engine. In other words, especially when the engine is driven at a high speed or in a high-load state, the mean pressure in the exhaust passage becomes high, and the amplitude of exhaust pulsation becomes small. As a result, it is impossible to generate a great negative pressure in the exhaust passage downstream of the catalyst. Therefore, especially when the engine is driven at a high speed or in a high-load state, it is impossible to supply a sufficient amount of secondary air into the exhaust passage downstream of the catalyst.
On the other hand, in the method of using the air pump, secondary air can be supplied even when the engine is driven at a high speed or in a high-load state. However, the load of the air pump becomes greater in proportion to an increase in the speed or the load of the engine. The air pump is driven by the engine, and therefore the loss of engine output likewise becomes greater in proportion to an increase in the speed or the load of the engine.
The present inventor found a shock wave propagating through the exhaust passage toward the downstream side when an exhaust port is opened. Hence, the present inventor thought that air can be supplied by using the generation of a negative pressure behind the shock wave even if the engine is in a high-load state. However, this shock wave occurs near the exhaust port, then propagates toward the downstream side, and attenuates and disappears. Therefore, it is impossible to use this in order to generate a negative pressure downstream of the catalyst.

Accordingly, the present inventor thought of generating a new negative pressure by generating another new shock wave in the exhaust passage. That is to apply the principle of a convergent-divergent nozzle, which is generally known and which is commonly referred to as a "die Laval nozzle," to an engine including a secondary air supply system. This nozzle is composed of a convergent portion in which the cross-sectional area of a flow passage becomes smaller in proportion to progress toward the downstream side of the flow passage, a divergent portion in which the cross-sectional area of the flow passage becomes larger downstream of the convergent portion, and a throat portion between the convergent portion and the divergent portion. The flow velocity of a fluid exceeds the sound velocity at the divergent portion when the pressure ratio (P/P0) between the pressure P0 of the convergent portion and the pressure P of the divergent portion is smaller than the critical pressure ratio (about 0.528 in a case of air).

Therefore, in order to generate a new shock wave, a convergent portion in which the cross-sectional area of the flow passage of a downstream end is smaller than that of an upstream end was disposed at the exhaust passage, and a divergent portion in which the cross-sectional area of the flow passage of a downstream end is larger than that of an upstream end was disposed in the exhaust passage downstream of the convergent portion. However, even if the convergent portion and the divergent portion are merely disposed in the exhaust passage, the pressure ratio (P/P0) between the pressure P0 of the convergent portion and the pressure P of the divergent portion cannot reach the critical pressure ratio, and therefore a new shock wave was not able to be generated.

The present inventor further diligently researched the engine, and, as a result, found that, when the exhaust port is opened, a shock wave propagating through the exhaust passage toward the downstream side propagates at a higher velocity than exhaust gas flowing into the exhaust passage from a combustion chamber at that time. Additionally, the present inventor thought about a structure for heightening the pressure P0 of the convergent portion while paying attention to a difference between the velocity of the shock wave and that of the exhaust gas. This structure includes a branch portion created to temporarily divide a preceding shock wave from the exhaust passage and return it to the exhaust passage again. A new shock wave is generated at the divergent portion resulting from a rise in the pressure P0 of the convergent portion. As a result, a negative pressure is generated behind the shock wave, i.e., upstream of the divergent portion.

Additionally, the present inventor thought about a structure for supplying air by using this negative pressure generated upstream of the divergent portion. This structure includes a first passage connected to the exhaust passage upstream of the divergent portion and a second passage connected to the first passage.

One embodiment of the present invention provides an engine using these structures. In detail, the engine according to one embodiment of the present invention includes a combustion chamber that has an exhaust port; an exhaust valve that opens and closes the exhaust port; an exhaust system that has an exhaust passage, the exhaust passage guiding exhaust gas discharged from the combustion chamber through the exhaust port; and an air supply system that supplies air. The exhaust system includes a convergent portion that is disposed in the exhaust passage and that has its downstream end and its upstream end in which a cross-sectional area of a flow passage at the downstream end is smaller than a cross-sectional area of a flow passage at the upstream end; a divergent portion that is disposed downstream of the convergent portion in the exhaust passage and that has its downstream end and its upstream end in which a cross-sectional area of a flow passage at the downstream end is greater than a cross-sectional area of a flow passage at the upstream end; and a branch portion that allows a shock wave to branch from the exhaust passage upstream of the divergent portion and that allows the shock wave to propagate through the exhaust passage again, the shock wave propagating through the exhaust passage toward a downstream side at higher velocity than exhaust gas that flows into the exhaust passage from the combustion chamber when the exhaust port is opened. The air supply system includes a first passage that has its downstream end and its upstream end in which the downstream end is connected to the exhaust passage upstream of the divergent portion, the first passage having a first reed valve through which an airflow running from the upstream end to the downstream end passes; and a second passage that has its downstream end and its upstream end in which the upstream end is connected to the first passage downstream of the first reed valve. Additionally, the exhaust system is arranged so that a new shock wave is generated by heightening a pressure of exhaust gas in the convergent portion in such a way that the exhaust gas flowing into the exhaust passage from the combustion chamber passes through the convergent portion and in such a way that the exhaust gas is allowed to collide with a shock wave that has propagated through the branch portion between the branch portion and the divergent portion and by allowing the exhaust gas whose pressure has been heightened to pass through the divergent portion. Additionally, the air supply system is arranged so that air is injected into the first passage through the first reed valve by using a negative pressure generated by the new shock wave in the exhaust passage upstream of the divergent portion and so that the air injected thereinto is supplied to the second passage by using a positive pressure generated in the exhaust passage upstream of the divergent portion.

According to these arrangements, a shock wave preceding exhaust gas branches temporarily at the branch portion, and is again returned to the exhaust passage. As a result, the shock wave can be delayed in time at the branch portion, and the pressure of the exhaust gas can be heightened by allowing this shock wave to collide with the exhaust gas in the exhaust passage. The exhaust gas is further pressurized by being passed through the convergent portion, and therefore the pressure ratio (P/P0) between the pressure P0 of the convergent portion and the pressure P of the divergent portion can easily reach a critical pressure ratio. In other words, when high-pressure exhaust gas passes through the divergent portion, a new shock wave (which is different from a shock wave generated when the exhaust port is opened) is generated. A great negative pressure is generated upstream of this new shock wave, i.e., upstream of the divergent portion. Secondary air can be injected into the first passage from the upstream end of the first passage by using the great negative pressure. The term "secondary air" denotes air outside the engine that has not flowed through the combustion chamber.

On the other hand, a positive pressure and a negative pressure are alternately generated by exhaust pulsation in the exhaust passage upstream of the divergent portion. Because of the great negative pressure generated upstream of the divergent portion, the amplitude of the exhaust pulsation becomes greater. The secondary air injected into the first passage when the negative pressure is generated is pushed out from the first passage when the positive pressure is generated, and the secondary air is supplied to the second passage.

The downstream end of the second passage may be connected to the exhaust passage. In other words, secondary air pushed out from the first passage may be supplied to the exhaust passage through the second passage. This arrangement is especially advantageous in a case in which a catalyst is disposed in the exhaust passage downstream of the divergent portion. In other words, even if the engine is driven at a high rotational speed or is driven in a high-load state, secondary air can be supplied to the exhaust passage downstream of the catalyst by using a great negative pressure generated by a new shock wave and a positive pressure generated by exhaust pulsation. The positive pressure and the negative pressure generated at this time use the energy of exhaust gas, and therefore the loss of engine output can be reduced.

The aforementioned or other objects, features, and advantages of the present invention will become more apparent from the following description of the embodiments with reference to the attached drawings.

BRIEF DESCRIPTION OF THE DRAWINGS

FIG. 1 is a sectional view showing an arrangement of an engine according to a first embodiment of the present invention.

FIG. 2 is a schematic view showing an arrangement of a convergent-divergent nozzle.

FIG. 3 is a graph showing a relationship between the Mach number and the pressure ratio of the convergent-divergent nozzle.

FIGs. 4A-4C are sectional views for describing progress state of a shock wave and exhaust gas. FIG. 4A shows an initial state of an exhaust stroke, FIG. 4B shows a state when a shock wave propagates into a branch passage, and FIG. 4C shows a state when the shock wave reflected at the branch passage collides with exhaust gas.

FIG. 5 is a schematic view of the exhaust passage and so forth showing a route along which a shock wave travels and a route along which exhaust gas proceeds.

FIG. 6 is a schematic view that schematizes a photograph of the inside of the convergent-divergent nozzle taken by Schlieren photography.

FIG. 7 is a graph showing a relationship between the exhaust-gas flow rate and the exhaust-gas pressure when a shock wave is accelerated.

FIG. 8 is a graph showing a relationship between the exhaust-gas flow rate and the exhaust-gas temperature when a shock wave is accelerated.

FIGs. 9A-9C are views for describing the action of a secondary air supply system. FIG. 9A is a view showing one example of a relationship between the pressure in the exhaust passage and the crank angle. FIG. 9B is a view showing one example of a relationship between the crank angle and the mass flow rate of gas in a first passage. FIG. 9C is a view showing one example of a relationship between the crank angle and the oxygen concentration in each of the secondary air supply system and the exhaust passage.

FIG. 10 is a sectional view showing an arrangement of an exhaust passage and so forth of an engine according to a second embodiment of the present invention.

FIG. 11 is a sectional view showing an arrangement of an exhaust passage and so forth of an engine according to a third embodiment of the present invention.

FIG. 12 is a sectional view for describing an arrangement of an exhaust system and so forth of an engine according to a fourth embodiment of the present invention.

FIG. 13 is a sectional view for describing an arrangement of an exhaust system and so forth of an engine according to a fifth embodiment of the present invention.

FIG. 14 is a pictorial perspective view for describing an arrangement example of a catalyst.

FIG. 15 is a sectional view for describing an arrangement of an exhaust system and so forth of an engine according to a sixth embodiment of the present invention.

FIG. 16 is a schematic view showing an arrangement of an exhaust system of an engine according to a seventh embodiment of the present invention.

FIGs. 17A-17C are schematic views showing the operation of the engine according to the seventh embodiment. FIG. 17A shows an initial state of an exhaust stroke, FIG. 17B shows a state when a shock wave propagates into an individual exhaust passage (branch passage) of another cylinder, and FIG. 17C shows a state when a shock wave reflected at the branch passage collides with exhaust gas.

FIG. 18 is a view illustrating a vessel that has an outboard motor in which an engine is mounted.

FIG. 19 is a view illustrating a motorcycle in which an engine is mounted.

FIG. 20 is a sectional view of an exhaust passage and so forth showing a modification.

FIG. 21 is a sectional view showing an arrangement according to a modification of the first embodiment.

FIG. 22 is a schematic view showing an arrangement according to an eighth embodiment of the present invention.

MODES FOR CARRYING OUT THE INVENTION

As a result of diligent research, the present inventor has realized that a sufficient amount of secondary air can be supplied by applying the principle of a convergent-divergent nozzle according to the following previously unknown method.

The method is as fallows (1) Dividing a propagating shock wave precedent to exhaust gas; (2) Heightening the pressure of the exhaust gas by temporally delaying the divided shock wave and by allowing the shock wave to collide with the exhaust gas; (3) Generating a new shock wave by allowing highly-pressurized exhaust gas to pass through a divergent portion and to be accelerated to supersonic velocities; (4) Generating a negative pressure in the exhaust passage upstream of the divergent portion; (5) Injecting secondary air into a first passage of a secondary air supply system connected upstream of the divergent portion by using the negative pressure; and (6) Supplying secondary air to a second passage of the secondary air supply system by using a positive pressure generated in the exhaust passage upstream of the divergent portion.

<First Embodiment>

An engine according to an embodiment of the present invention will be hereinafter described in detail with reference to the drawings. In the following description, the terms "upstream" and "downstream" are "upstream" and "downstream" relative to the flow direction of exhaust gas or secondary air, respectively.

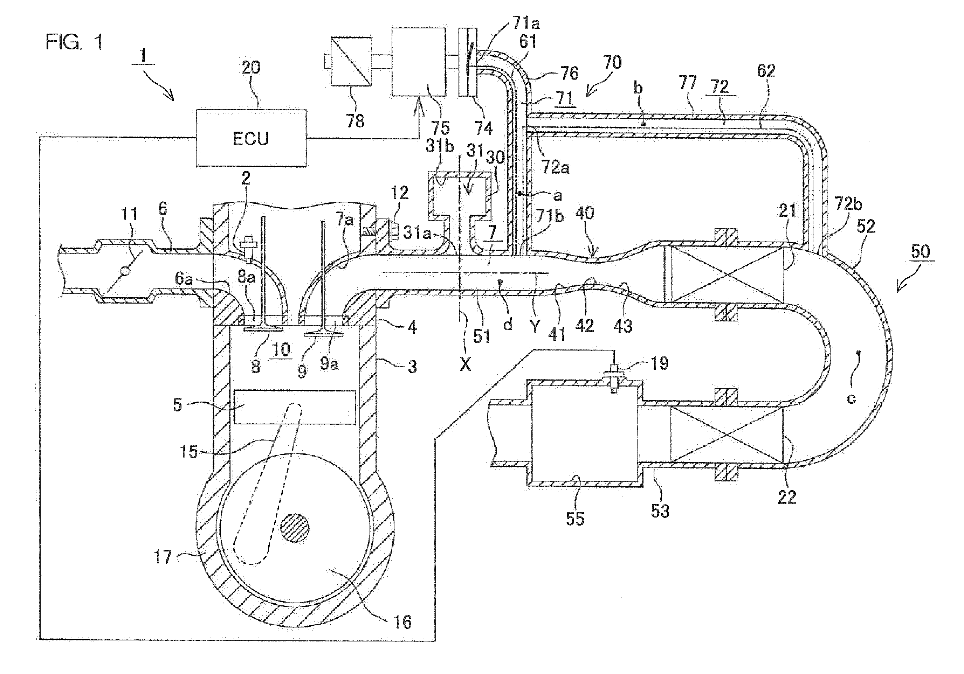

FIG. 1 is a sectional view showing an arrangement of an engine according to a first embodiment of the present invention. The engine 1 includes a cylinder body 3, a cylinder head 4 disposed at its one end, and a piston 5 that reciprocates in the cylinder body 3. A combustion chamber 10 is defined in the cylinder body 3 and the cylinder head 4. In more detail, the combustion chamber 10 is defined by the inner wall of the cylinder body 3, the inner wall of the cylinder head 4, and the front surface of the piston 5 (i.e., front surface that faces the cylinder head 4). The piston 5 is connected to a crankshaft 16 through a connecting rod 15. The crankshaft 16 is contained in a crankcase 17 connected to the cylinder body 3. The reciprocating motion of the piston 5 is transmitted to the crankshaft 16 by means of the connecting rod 15, thereby rotating the crankshaft 16. The engine 1 is a four-stroke gasoline internal combustion engine. The engine 1 is a single cylinder engine. The engine 1 may be an air-cooled engine or may be a water-cooled engine.

A downstream portion 6a of an intake passage 6 and an upstream portion 7a of an exhaust passage 7 are defined by the cylinder head 4. The cylinder head 4 includes an intake valve 8 that opens and closes an intake port 8a, an exhaust valve 9 that opens and closes an exhaust port 9a, and a valve driving device (not shown) used to drive the intake valve 8 and the exhaust valve 9. In the present embodiment, one downstream portion 6a of the intake passage 6 and one upstream portion 7a of the exhaust passage 7 are provided for the single combustion chamber 10. However, a plurality of intake ports 8a, a plurality of intake valves 8, a plurality of exhaust ports 9a, and/or a plurality of exhaust valves 9 may be provided for the single combustion chamber. An injector 2 that jets fuel is attached to the cylinder head 4. The cylinder head 4 is provided with a spark plug not shown.

The intake passage 6 has a throttle valve 11 disposed upstream of the downstream portion 6a. The throttle valve 11 may be mechanically coupled to an operation member operated by an operator (e.g., be coupled therewith through a cable). Alternatively, without being mechanically coupled in such a way, the throttle valve 11 may be electronically controlled by a motor.

The engine 1 additionally includes an exhaust system 50. The exhaust system 50 includes a first exhaust pipe 51 connected to the cylinder head 4, a second exhaust pipe 52 connected to the first exhaust pipe 51, and a third exhaust pipe 53 connected to the second exhaust pipe 52. The first exhaust pipe 51 is attached to the cylinder head 4 with a bolt 12. The third exhaust pipe 53 defines an exhaust chamber 55 in its inside. The exhaust system 50 has the exhaust passage 7 connected to its outside from the upstream portion 7a through the exhaust chamber 55 in its inside.

A first catalyst 21 and a second catalyst 22 are disposed in the exhaust passage 7. The second catalyst 22 is disposed downstream of the first catalyst 21. A space is provided between the first catalyst 21 and the second catalyst 22. A muffler (not shown) is connected to the passage downstream of the exhaust chamber 55. Exhaust gas that has flowed into the exhaust chamber 55 passes through the muffler, and is then discharged outwardly. The exhaust chamber 55 has an oxygen concentration sensor 19 that detects the amount of oxygen in exhaust gas.

The engine 1 includes an ECU (Electronic Control Unit) 20 that is a control unit. Based on the rotation speed of the engine 1, based on the opening degree of the throttle valve 11, or based on a signal detected by the oxygen concentration sensor 19, the ECU 20 controls the amount of fuel injection of the injector 2, the ignition timing of the spark plug, and so forth. For example, the ECU 20 controls the amount of fuel injection of the injector 2 so that the air-fuel ratio of an air-fuel mixture taken into the engine 1 becomes a theoretical air fuel ratio (stoichiometry).

A branch pipe 30 is disposed at the upstream portion of the first exhaust pipe 51. One end of the branch pipe 30 is an open end connected to the first exhaust pipe 51, and the other end thereof is a closed end. The closed end has a reflecting portion 31b formed to reflect a shock wave described later.

The branch pipe 30 may be integrally molded with the first exhaust pipe 51. Alternatively, the branch pipe 30 may be formed so as to be a structurally independent component separated from the first exhaust pipe 51 and so as to be fixed to the first exhaust pipe 51. For example, the first exhaust pipe 51 and the branch pipe 30 may be welded together or may be fixed to each other by means of a fastening member (not shown) such as a bolt or a rivet. The closed end of the branch pipe 30 is formed so that the cross-sectional area of the flow passage is greater than the open end thereof. However, the shape of the branch pipe 30 is not limited to that of FIG. 1. In other words, the cross-sectional area of the flow passage of the closed end of the branch pipe 30 may be equal to or be smaller than that of the open end thereof.

A branch portion 31 is formed in the branch pipe 30. One end of the branch portion 31 is an open end connected to the exhaust passage 7, and the other end thereof is a closed end. As described later, an inlet 31a of the branch portion 31 (i.e., a part communicating with the exhaust passage 7) is formed so as to have a cross-sectional area of the flow passage that enables a shock wave propagating through the inside of the exhaust passage 7 to also propagate through the inside of the branch portion 31. In the figure, X represents a center line of the cross section of the flow passage of the inlet 31a of the branch portion 31. The center line is a line that passes through a gravity center of the cross section of the flow passage.

A convergent-divergent nozzle 40 is disposed between the branch portion 31 and the first catalyst 21. The convergent-divergent nozzle 40 is commonly referred to as a "de Laval nozzle." The convergent-divergent nozzle 40 accelerates the flow velocity of exhaust gas flowing through the exhaust passage 7 so as to become supersonic velocities from subsonic velocities. The convergent-divergent nozzle 40 is composed of a convergent portion 41, a throat portion 42, and a divergent portion 43. The convergent portion 41 is a portion in which the cross-sectional area of the flow passage gradually decreases in proportion to progress toward the downstream side. The divergent portion 43 is a portion in which the cross-sectional area of the flow passage gradually increases in proportion to progress toward the downstream side. The throat portion 42 is a portion disposed between the convergent portion 41 and the divergent portion 43, and is the smallest in the cross-sectional area of the flow passage.

The engine 1 additionally includes a secondary air supply system 70 that supplies air to the exhaust passage 7 of the exhaust system 50. The secondary air supply system 70 includes a reed valve 74 (check valve), a first secondary air supply pipe 76, and a second secondary air supply pipe 77 connected to the first secondary air supply pipe 76. The reed valve 74 is connected to an upstream end of the first secondary air supply pipe 76. A downstream end of the first secondary air supply pipe 76 is connected to the first exhaust pipe 51 between the branch pipe 30 and the convergent-divergent nozzle 40. The first secondary air supply pipe 76 is connected to an air cleaner 78 through the reed valve 74 and an air amount control valve 75. The reed valve 74 prevents exhaust gas from flowing from the first secondary air supply pipe 76 to the upstream side of the reed valve 74. The reed valve 74 is arranged so as to be opened by the generation of a negative pressure in the exhaust passage 7 and so as to allow air to flow toward the downstream side in the first secondary air supply pipe 76.

The air amount control valve 75 serves to adjust the amount of secondary air to the operational state of the engine 1. The air amount control valve 75 includes an actuator such as the one using an intake negative pressure as a power source, a servo motor, a solenoid or the like. The opening degree of the air amount control valve 75 is controlled by the ECU 20. If the opening degree of the throttle valve 11 is smaller than a predetermined angle, the ECU 20 allows the air amount control valve 75 to perform a closing operation or allows the throttle valve 11 to decrease its opening degree. The predetermined angle is pre-set and is stored in the ECU 20. If the opening degree of the throttle valve 11 is greater than the predetermined angle, the ECU 20 allows the air amount control valve 75 to increase its opening degree. Accordingly, the air amount control valve 75 increases or decreases its opening degree in accordance with the opening degree of the throttle valve 11. The disposition of the air amount control valve 75 makes it possible to supply secondary air to the exhaust passage 7 in a proper amount of flow neither too much nor too less. However, the air amount control valve 75 is not necessarily required to be disposed, and can be removed.

An upstream end of the second secondary air supply pipe 77 is connected to the first secondary air supply pipe 76 between the downstream end of the pipe 76 and the reed valve 74. A downstream end of the second secondary air supply pipe 77 is connected to the second exhaust pipe 52 between the first catalyst 21 and the second catalyst 22. In more detail, the downstream end of the second secondary air supply pipe 77 is connected to the second exhaust pipe 52 at a position closer to the first catalyst 21 than to the second catalyst 22.

The secondary air supply system 70 has a first passage 71 and a second passage 72. The first passage 71 is a passage from the reed valve 74 to the exhaust passage 7, and is a passage defined by the first secondary air supply pipe 76. In other words, the first passage 71 connects the reed valve 74 to the exhaust passage 7 between the inlet 31a of the branch portion 31 and the divergent portion 43. The second passage 72 is a passage from the first passage 71 to the exhaust passage 7 in the second exhaust pipe 52, and is a passage defined by the second secondary air supply pipe 77. In other words, the second passage 72 connects the first passage 71 to the exhaust passage 7 between the first catalyst 21 and the second catalyst 22. The terms "upstream" and "downstream" in the first passage 71 are "upstream" and "downstream" relative to a direction of air flowing from the reed valve 74 (i.e., the upstream end 71a of the first passage 71) to a connection portion 71b connected to the exhaust passage 7 (hereinafter, referred to also as a "downstream end 71b"). The terms "upstream" and "downstream" in the secondpassage 72 are "upstream" and "downstream" relative to a direction of air flowing from a connection portion 72a connected to the first passage 71 (hereinafter, referred to also as an "upstream end 72a") to a connection portion 72b of the exhaust passage 7 (hereinafter, referred to also as a "downstream end 72b").

Here, when gas flows from the reed valve 74 to the connection portion 72a, which is connected to the first passage 71, of the second passage 72 in the first passage 71, let the magnitude of energy (energy loss) that the above-mentioned gas loses be L1. Additionally, when gas flows from the downstream end 72b to the upstream end 72a in the second passage 72, let the magnitude of energy (energy loss) that the above-mentioned gas loses be L2. From a comparison therebetween, the first and second passages 71 and 72 are designed so that L1<L2. The "energy loss" is synonymous with the "pressure loss in the flow passage of gas."

It is preferable to satisfy the relation L1+L3<L2+L3 where L3 is the energy loss of gas in a flow passage from the connection portion 72a of the second passage 72 to the connection portion 71b connected to the exhaust passage 7 in the first passage 71. The equation L11=L1+L3 is satisfied where L11 is the energy loss in a flow passage 61 from the reed valve 74 to the connection portion 71b connected to the exhaust passage 7 in the first passage 71. On the other hand, the equation L12=L2+L3 is satisfied where L12 is the energy loss in a flow passage 62 from the downstream end 72b to the upstream end 72a of the second passage 72 and further to the downstream end 71b through the first passage 71. Therefore, it is preferable to design the first and second passages 71 and 72 so as to satisfy the relation L11<L12.

The relationship between these energy losses can be verified as follows, for example. In detail, the second passage 72 is closed (e.g., is closed at the downstream end 72b), air is then allowed to flow through the passage 61, and the flow coefficient k1 at the downstream end (the connection portion 71b) of the flow passage 61 is measured. On the other hand, the first passage 71 is closed (e.g., is closed at the upstream end 71a), air is then allowed to flow through the passage 62, and the flow coefficient k2 is measured at the downstream end (the connection portion 71b) of the flow passage 62. At this time, if the relation k1>k2 is satisfied, the relation L11<L12 is satisfied. In order to allow air to flow through the flow passages 61 and 62, it is preferable to use either of the following methods. A first method is to send air to the flow passages 61 and 62 by connecting a pump to the upstream ends of the flow passages 61 and 62. A second method is to draw air from the flow passages 61 and 62 by connecting a pump to the downstream ends of the flow passages 61 and 62.

If the energy loss is not negligible in the air amount control valve 75 and/or in the air cleaner 78, these may be included in the flow passage 61. In this case, the flow passage 61 is a flow passage from an atmospheric open position to the connection portion 71b. Let it be supposed that the energy loss L1 is the magnitude of energy that gas loses when the gas flows from the atmospheric open position to the connection portion 72a, which is connected to the first passage 71, of the second passage 72.

The flow coefficient is the ratio of the amount of flow of air that has actually flowed with respect to the theoretical amount of flow of air determined by an actual opening area and by differential pressure. In other words, the flow coefficient can be obtained by dividing the actual amount of flow of air by the theoretical amount of flow of air. Examples of energy losses when gas flows through a pipe passage include a loss caused by friction with a wall surface, a loss at an inlet or outlet of the pipe passage, a loss caused by a curve of the pipe passage, a loss caused by a change in the cross-sectional area of the flow passage, and a loss caused by valves. The loss caused by a change in the cross-sectional area of the flow passage is a loss caused when the cross-sectional area suddenly becomes large or small or when the cross-sectional area gradually becomes large or small.

The loss caused by friction with a wall surface becomes greater in proportion to an increase in the surface roughness of the wall surface, an increase in the length of the pipe passage, and a decrease in the cross-sectional area of the pipe passage. The loss caused by a curve of the pipe passage becomes greater in proportion to an increase in the ratio obtained by dividing a pipe diameter by the curvature radius of the curve and an increase in the angle of the curve. The loss caused by valves depends on the kind or the opening degree of a valve, and is required to be calculated by experiments. The loss caused by a reed valve can be calculated by measuring a relationship among, for example, a pressure difference between the upstream side above the reed valve and the downstream side below the reed valve, the opening degree of the reed valve (i.e., the cross-sectional area of the flow passage), and the mass flow and by drawing a relationship between the pressure difference and the loss factor based on the measurement result.

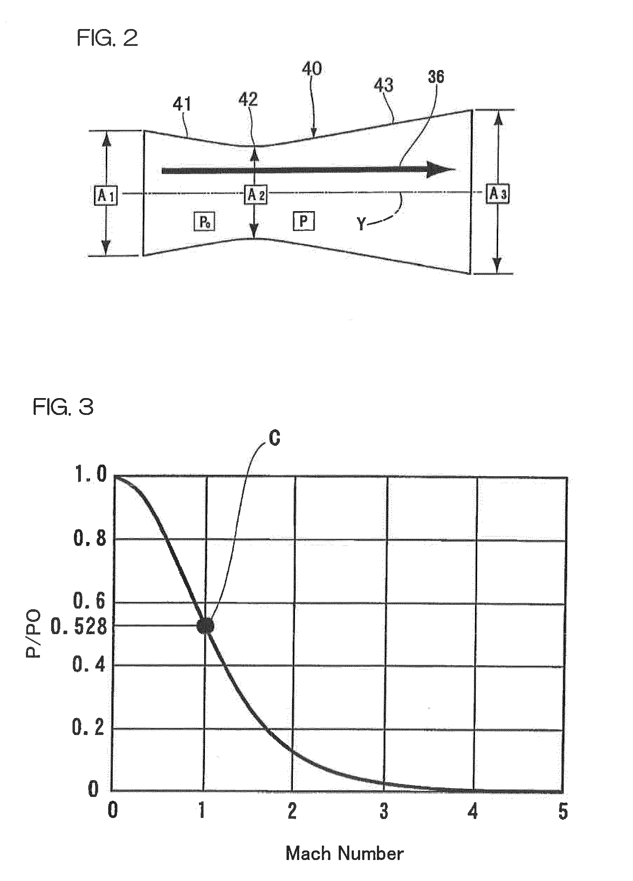

FIG. 2 is a schematic view of a convergent-divergent nozzle that is generally used. The relation A1>A2 and the relation A2<A3 exist among the cross-sectional area A1 of the flow passage of the upstream end of the convergent portion 41, the cross-sectional area A2 of the flow passage of the throat portion 42, and the cross-sectional area A3 of the flow passage of the downstream end of the divergent portion 43. The cross-sectional area A2 of the flow passage of the throat portion 42 is equal to the cross-sectional area of the flow passage of the downstream end of the convergent portion 41, and is equal to the cross-sectional area of the flow passage of the upstream end of the divergent portion 43. In the present embodiment, each of the cross-sectional area of the flow passage of the convergent portion 41 and the cross-sectional area of the flow passage of the divergent portion 43 changes at a constant rate along the flow direction. However, the convergent portion 41 and the divergent portion 43 may have other shapes, respectively. For example, like a nozzle employed in rocket engines, each portion may employ a shape in which the cross-sectional area of the flow passage changes step by step. Alternatively, the inner surface of the nozzle may be formed to be a smooth curved surface.

The convergent-divergent nozzle 40 is designed to satisfy conditions shown by the following numerical formulas (1) and (2). Exhaust gas can be accelerated to supersonic velocities in the divergent portion 43 by allowing the flow velocity of the exhaust gas flowing into the throat portion 42 to reach Mach 1 (i.e., sound velocity).

[Formula 1]

$$\frac{dM}{dx} = \frac{\Lambda}{1-M^2} \cdots (1)$$

[Formula 2]

$$\Lambda \equiv M\left[1 + \frac{\gamma-1}{2}M^2\right]\left[\frac{\gamma M^2}{2}(\frac{4f}{D}) - \frac{1}{A}\frac{dA}{dx}\right] \cdots (2)$$

The formula (1) shows a relationship between the shape of the exhaust pipe in a one-dimensional flow accompanied by viscose friction and Mach numbers. The formula (2) expresses Λ of the formula (1). In these formulas, M is a Mach number, A is the cross-sectional area in an arbitrary cross section of the exhaust pipe, D is a pipe-equivalent diameter in the arbitrary cross section, y is the ratio of specific heat, x is a distance in a flow direction, and f is a friction coefficient.

As shown in FIG. 2, let the full pressure upstream of the throat portion 42 be P0, and let the static pressure downstream of the throat portion 42 be P. As shown in FIG. 3, when the ratio P/P0 between these pressures is smaller than the critical pressure ratio = 0.528 (point C of FIG. 3), the velocity at the throat portion 42 reaches a sound velocity (Mach 1) or more, and, as a result, the velocity at the divergent portion 43 reaches a supersonic velocity. Therefore, if the full pressure P0 is heightened so that the ratio P/P0 becomes smaller than the critical pressure ratio, the flow of the supersonic velocity can be created in the convergent-divergent nozzle 40.

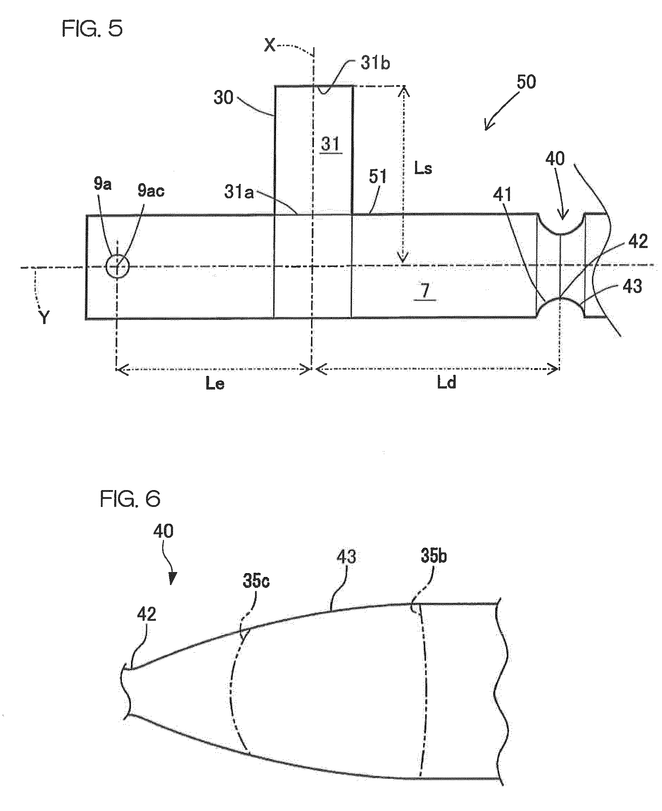

When the flow velocity in the convergent-divergent nozzle 40 reaches the supersonic velocity, a shock wave 35b propagating toward the downstream side below the divergent portion 43 and an expansion wave 35c propagating toward the upstream side thereabove are generated (see FIG. 6). A fluid in a space between the shock wave 35b and the expansion wave 35c expands rapidly, and therefore the pressure of exhaust gas flowing through the exhaust passage 7 becomes low. As a result, the temperature of the exhaust gas can be rapidly lowered by the effect of adiabatic cooling caused by adiabatic expansion. As a result of diligent research, the present inventor has achieved such a state by combining the convergent-divergent nozzle 40 and the branch portion 31 with each other.

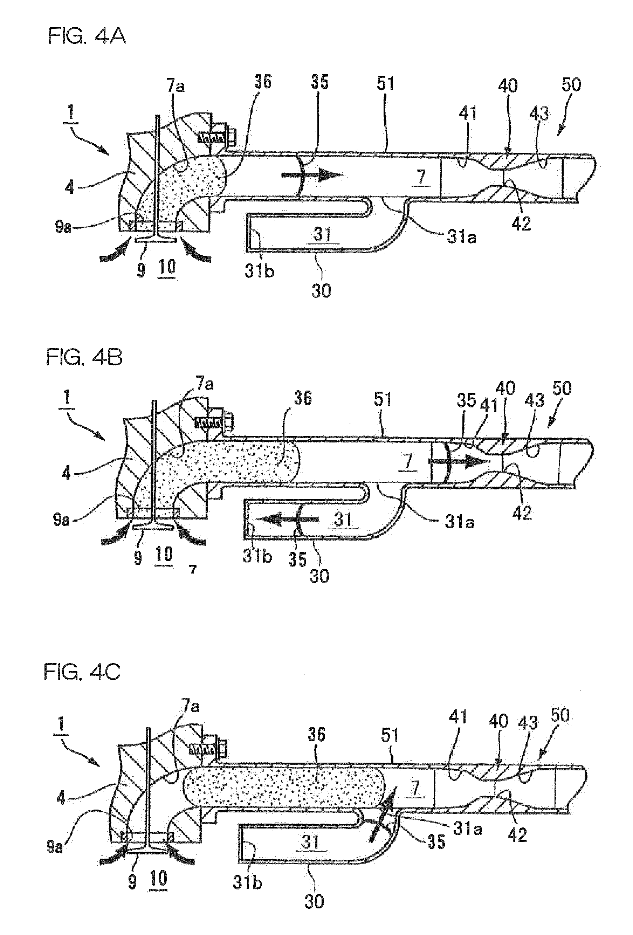

Next, with reference to FIG. 4A to FIG. 4C, a description will be given of the principle that exhaust gas reaches a state of being low in pressure and a state of being low in temperature in the exhaust passage 7. FIG. 4A to FIG. 4C schematically show the engine 1 including the exhaust system 50. In FIG. 4A to FIG. 4C, the same reference numeral is given to the same or equivalent component as in FIGS. 1 and 2.

As shown in FIG. 4A, when the exhaust port 9a is opened in the exhaust stroke of the engine 1, high-pressure exhaust gas 36 ejects from the combustion chamber 10 to the upstream portion 7a of the exhaust passage 7 through the exhaust port 9a. At a time point where the exhaust port 9a starts to open, a pressure difference between the combustion chamber 10 and the upstream portion 7a of the exhaust passage 7 is large, and therefore the velocity of the exhaust gas 36 reaches the sound velocity, and a shockwave 35 is generated at the upstreamportion 7a of the exhaust passage 7. As the opening of the exhaust port 9a gradually becomes larger, the velocity of exhaust gas that flows out toward the upstream portion 7a of the exhaust passage 7 becomes slower although the amount of the exhaust gas becomes larger. Additionally, the exhaust gas is decelerated in proportion to progress toward the upstream portion 7a of the exhaust passage 7. As shown in FIG. 4A, the shock wave 35 propagates into the first exhaust pipe 51 from the upstream portion 7a of the exhaust passage 7, and furthermore propagates toward the downstream side at a high velocity. On the other hand, the exhaust gas 36 proceeds through the exhaust passage 7 at a lower velocity than the shock wave 35.

As shown in FIG. 4B, when the shock wave 35 traveling through the inside of the first exhaust pipe 51 passes through the inlet 31a of the branch portion 31, the shock wave 35 divides into a shock wave propagating through the exhaust passage 7 and a shock wave propagating through the branch portion 31, and the resulting shock waves respectively travel through the exhaust passage 7 and the branch portion 31 independently of each other. The shock wave 35 traveling through the exhaust passage 7 passes through the convergent-divergent nozzle 40, then attenuates, and disappears. On the other hand, the shock wave 35 traveling through the branch portion 31 is reflected by the reflecting portion 31b of the branch portion 31, and returns to the exhaust passage 7 while traveling through the branch portion 31 backwardly.

As shown in FIG. 4C, the length of the branch portion 31 is set so that the time when the shock wave 35 reflected thereby returns from the branch portion 31 to the exhaust passage 7 coincides with or becomes later than the time when the high-pressure exhaust gas 36 reaches the center of the inlet 31a of the branch portion 31. Therefore, the shock wave 35 and the exhaust gas 36 collide with each other upstream of the divergent portion 43 and at the inlet 31a of the branch portion 31 or in the exhaust passage 7 downstream of it. This makes it possible to heighten the full pressure upstream of the throat portion 42 of the convergent-divergent nozzle 40. As a result, a state in which the pressure ratio P/P0 becomes smaller than the critical pressure ratio can be realized, and a flow having a supersonic velocity can be created in the convergent-divergent nozzle 40.

FIG. 5 is a schematic view of the exhaust passage 7 and so forth showing a route along which a shock wave travels and a route along which exhaust gas proceeds. Let a distance (i.e., a flow passage length) from a center 9ac of the exhaust port 9a to a center line X of the flow-passage cross section of a branch-portion inlet 31a be Le, and let a distance (i.e., a flow passage length) between a center line Y of the flow-passage cross section of the exhaust passage 7 and the reflecting portion 31b be Ls. Additionally, let the velocity of the exhaust gas 36 be Ve, and let the propagation velocity of the shock wave 35 be Vs. Time T1 from the opening of the exhaust port 9a to the arrival of the exhaust gas 36 at the inlet 31a is expressed by formula (3) . Additionally, time T2 from the opening of the exhaust port 9a to the arrival of the shock wave 35 at the center line Y of the exhaust passage 7 after being reflected by the reflecting portion 31b is expressed by formula (4).

$$T1=Le/Ve \ ...(3)$$

$$T2=(Le+2Ls)/Vs \ ...(4)$$

If T1≤T2, the shock wave 35 reflected thereby and the exhaust gas 36 collide with each other. In other words, if Le/Ve≤ (Le+2Ls) /Vs, the shock wave 35 reflected thereby and the exhaust gas 36 collide with each other upstream of the divergent portion 43 and at the inlet 31a of the branch portion 31 or in the exhaust passage 7 downstream of it. For convenience, for example, the maximum velocity of the exhaust gas 36 may be regarded as the velocity Ve mentioned above, or the average velocity thereof may be regarded as the velocity Ve. Likewise, for example, the maximum propagation velocity of the shock wave 35 reflected thereby may be regarded as the propagation velocity Vs mentioned above, or the average propagation velocity thereof may be regarded as the propagation velocity Vs.

As shown in FIG. 5, let a distance (i.e., a flow passage length) from the center line X of the flow-passage cross section of the branch-portion inlet 31a to the upstream end of the divergent portion 43 be Ld, and let time from the opening of the exhaust port 9a to the closing thereof be tv. Time T3 from the opening of the exhaust port 9a to the arrival of the exhaust gas 36 at the upstream end of the divergent portion 43 is expressed by formula (5). Time T4 from the opening of the exhaust port 9a to the arrival of the shock wave 35 at the upstream end of the divergent portion 43 after being reflected by the reflecting portion 31b is expressed by formula (6).

$$T3=tv+(Le+Ld)/Ve \ ...(5)$$

$$T4=(Le+2Ls+Ld)/Vs \ ...(6)$$

If T4≤T3, the reflected shock wave 35 and the exhaust gas 36 can be allowed to collide with each other before all of the exhaust gas 36 passes through the throat portion 42. In other words, if (Le+2Ls+Ld)/Vs≤tv+(Le+Ld)/Ve, the reflected shock wave 35 and the exhaust gas 36 can be allowed to collide with each other before all of the exhaust gas 36 passes through the throat portion 42.

If the distance Ls between the center line Y of the flow-passage cross section of the exhaust passage 7 and the reflecting portion 31b is comparatively small, the attenuation of the shock wave 35 in the branch portion 31 is restrained. Therefore, for example, the distance Ls may be made smaller than the distance Le.

The pressure of the exhaust gas is heightened by compression at the convergent portion 41. In addition to this, the pressure of the exhaust gas 36 at the convergent portion 41 is further heightened by a collision between the shock wave 35 and the exhaust gas 36. Thereupon, the full pressure P0 upstream of the inlet of the convergent-divergent nozzle 40 becomes high, and, accordingly, the ratio P/P0 between the full pressure P0 upstream of the inlet and the static pressure P downstream of the throat portion becomes smaller than the critical pressure ratio 0.528. As a result, the velocity of the exhaust gas 36 reaches the sound velocity at the throat portion 42.

FIG. 6 is a schematic view that schematizes a photograph of the inside of the convergent-divergent nozzle taken by Schlieren photography. The velocity of the exhaust gas 36 reaches the sound velocity, thereby generating a new shockwave in the convergent-divergent nozzle 40. Hereinafter, a newly generated shock wave is conveniently called a "traveling shock wave" 35b. This traveling shock wave 35b is accelerated when the wave passes through the divergent portion 43 of the convergent-divergent nozzle 40. When a traveling shock wave 35b is generated, an expansion wave 35c that travels in a direction opposite to the direction of the traveling shock wave 35b is generated. The traveling shock wave 35b is accelerated at the divergent portion 43, and, at the same time, the expansion wave 35c travels in the direction opposite to that of the traveling shock wave 35b. As a result, the exhaust gas 36 that exists between the traveling shock wave 35b and the expansion wave 35c is greatly reduced in pressure and in temperature. The pressure of the exhaust gas becomes smaller than atmospheric pressure, i.e., becomes a negative pressure as described later.

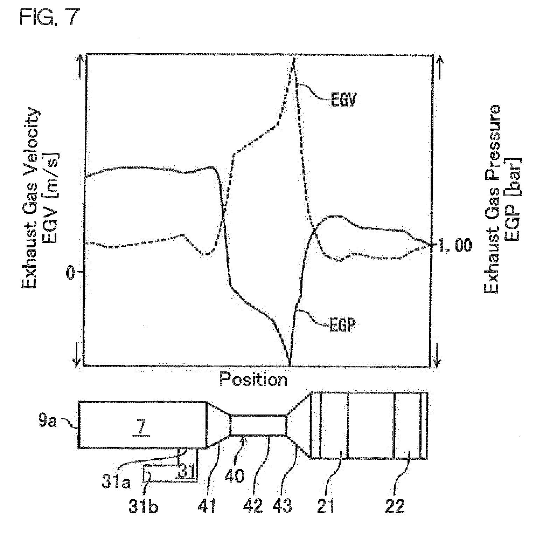

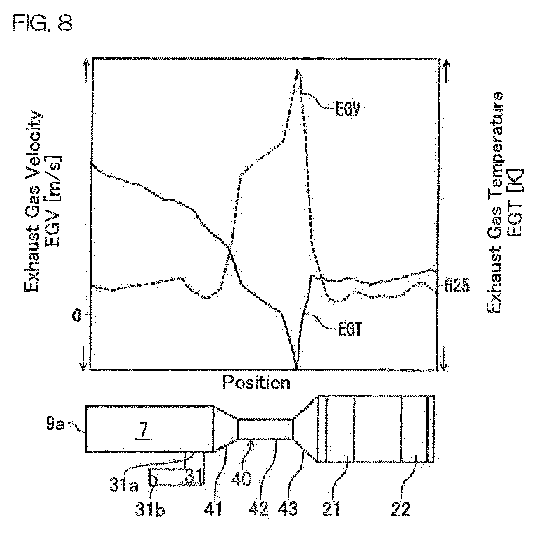

Simulation results obtained by the present inventor are shown in FIG. 7 and FIG. 8. FIG. 7 shows an exhaust gas velocity and an exhaust gas pressure at each position of the exhaust passage 7 immediately after a new shock wave 35b is generated in the convergent-divergent nozzle 40. FIG. 8 shows an exhaust gas velocity and an exhaust gas temperature at each position of the exhaust passage 7 immediately after a new shock wave 35b is generated in the convergent-divergent nozzle 40.

When a shock wave 35b is generated in the convergent-divergent nozzle 40, this shock wave 35b is accelerated at the divergent portion 43. Thereupon, the exhaust gas velocity is rapidly increased, and the exhaust gas pressure and the exhaust gas temperature are rapidly decreased as shown in FIG. 7 and FIG. 8. FIG. 7 and FIG. 8 show the exhaust gas velocity, and do not show the propagation velocity of a shock wave. A simulation result obtained when the throat portion 42 of the convergent-divergent nozzle 40 is set to be long is shown in FIG. 7 and FIG. 8.

When a shock wave 35 reflected at the branch portion 31 collides with exhaust gas 36, the shock wave 35 propagates through the throat portion 42 while preceding the exhaust gas 36. At this time, adiabatic expansion is caused in a space between the exhaust gas 36 and the shock wave 35, and the pressure is decreased, and therefore the exhaust gas 36 flows through the throat portion 42 without reducing its velocity in such a way as to be pulled by the shock wave 35. Therefore, it is preferable to set the length of a portion that continues with the same cross-sectional area of the flow passage of the throat portion 42 so as to be suited to the engine. As a result, timing at which the shock wave 35b is accelerated at the divergent portion 43, i.e., timing at which the exhaust gas pressure and the exhaust gas temperature are decreased can be set so as to be suited to the engine.

As described above, in the engine 1 according to the present embodiment, the exhaust gas pressure and the exhaust gas temperature in the exhaust passage 7 can be made greatly smaller than conventional ones.

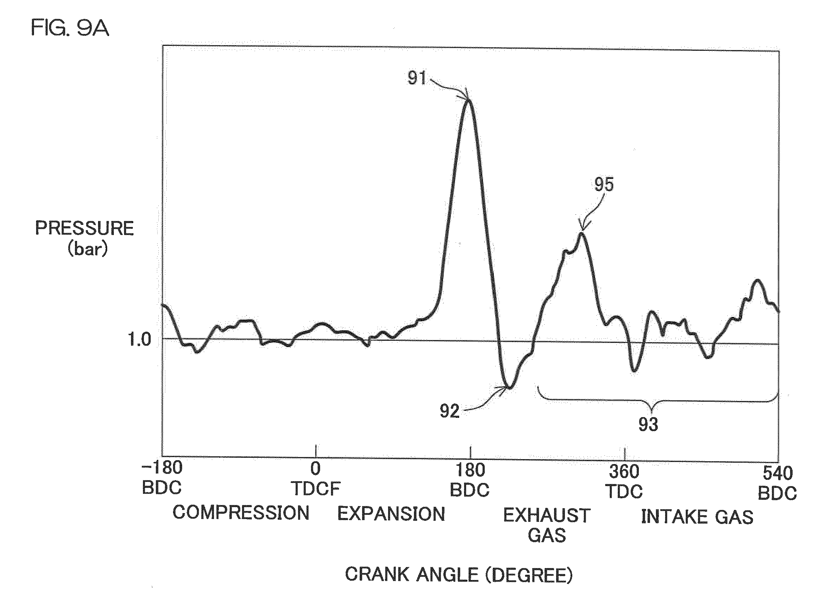

Next, the action of the secondary air supply system 70 will be described with reference to FIG. 9A to FIG. 9C showing simulation results obtained by the present inventor. The secondary air supply system 70 efficiently supplies secondary air to a portion of the exhaust passage 7 downstream of the first catalyst 21 by means of a negative pressure generated in a part of the exhaust passage 7 upstream of the divergent portion 43.

FIG. 9A is a view showing one example of a relationship between a rotation angle (crank angle) of the crankshaft 16 (see FIG. 1) and the pressure in the exhaust passage 7 observed in the engine 1 according to the present embodiment. When the exhaust port 9a is opened during an expansion stroke, high-pressure exhaust gas is discharged from the combustion chamber 10 into the exhaust passage 7. Therefore, as shown by reference numeral 91, the inside of the exhaust passage 7 becomes a positive pressure. Thereafter, as shown by reference numeral 92, a great negative pressure is generated in the exhaust passage 7 by the operation of the convergent-divergent nozzle 40. Thereafter, as shown by reference numeral 93, a positive pressure and a negative pressure are alternately generated by exhaust pulsation in the exhaust passage 7. Because of the great negative pressure generated by the operation of the convergent-divergent nozzle 40, the amplitude of the exhaust pulsation is greater than usual.

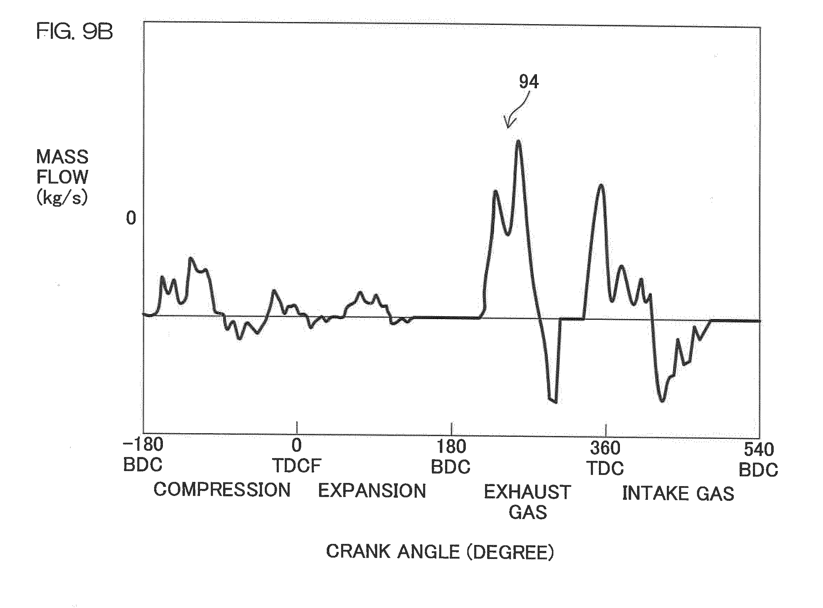

FIG. 9B is a view showing one example of a relationship between a rotation angle (crank angle) of the crankshaft 16 (see FIG. 1) and the mass flow of gas (i.e., gas passing through the reed valve 74) in the first passage 71 observed in the engine 1 according to the present embodiment. It should be noted that, in the mass flow, the amount of flow running in a direction from the upstream end (from the reed valve 74 side) toward the downstream end (toward the exhaust passage 7 side) of the first passage 71 is represented as a positive value, and the amount of flow running in the opposite direction is represented as a negative value. When a great negative pressure is generated in the exhaust passage 7(see reference numeral 92 of FIG. 9A), the inside of the first passage 71 also becomes a negative pressure, and, as a result, the reed valve 74 is opened. As a result, as shown by reference numeral 94 in FIG. 9B, gas flows into the first passage 71.

The magnitude relationship of energy loss between the flow passage 61 (see FIG. 1) from the reed valve 74 to the exhaust passage 7 through the first passage 71 and the flow passage 62 (see FIG. 1) from the downstream end 72b of the second passage 72 to the exhaust passage 7 through the upstream end 72a of the second passage 72 is as mentioned above. In detail, energy that is lost when gas flows through the flow passage 61 in which the reed valve 74 is disposed is smaller than energy that is lost when gas flows through the flow passage 62 in which the second passage 72 is disposed. A flow passage having a small energy loss is greater in the amount of flow of gas than a flow passage having a great energy loss, and therefore the amount of flow of gas flowing into the first passage 71 through the reed valve 74 becomes great. In other words, the amount of gas flowing from outside the engine 1 into the first passage 71 is greater than the amount of gas flowing from the second passage 72 into the first passage 71. Thus, air (secondary air) outside the engine 1 that contains a large amount of oxygen can be injected into the first passage 71.

Although the reed valve 74 has a structure that admits only a gas flow in one direction entering the first passage 71, a gas flow in the opposite direction occurs in a moment immediately before the valve is closed after the valve is temporarily opened. This is the reason why a negative mass flow value appears in FIG. 9B.

When a positive pressure is generated in the exhaust passage 7 upstream of the divergent portion 43 after air is injected into the first passage 71 from outside the engine 1 (see reference numeral 95 of FIG. 9A, for example), air in the first passage 71 is pushed out. The reed valve 74 does not allow gas to flow in a direction from the first passage 71 to the outside of the engine 1, and therefore air in the first passage 71 is pushed out toward the second passage 72.

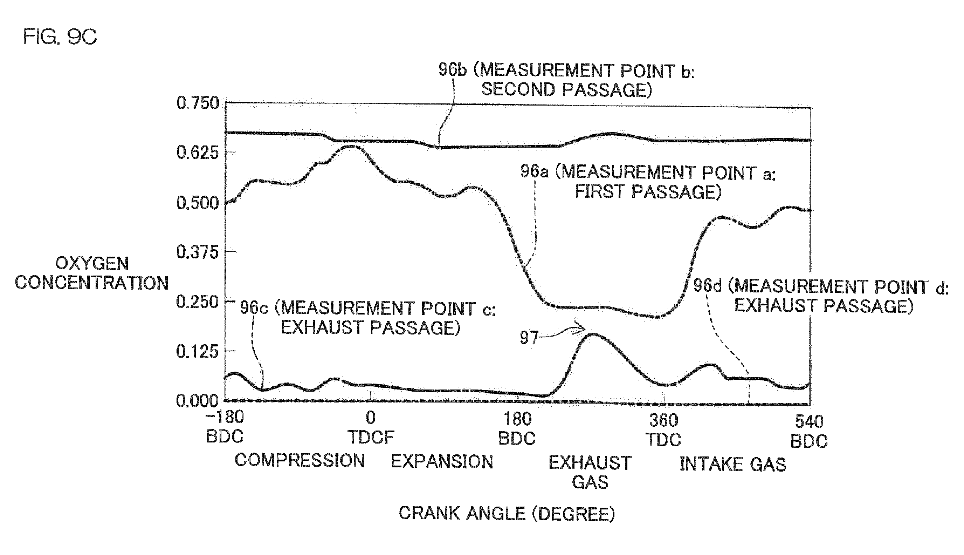

FIG. 9C is a view showing one example of a relationship between the rotation angle (crank angle) of the crankshaft 16 and the amount of oxygen (oxygen concentration) in each part of the secondary air supply system 70 and the exhaust passage 7. In detail, a curve 96a represents an oxygen concentration between the connection portion 72a of the second passage 72 and the exhaust passage 7 in the first passage 71 (e.g., at a measurement point "a" shown in FIG. 1). A curve 96b represents an oxygen concentration near the middle of the second passage 72 (between the upstream end 72a and the downstream end 72b; e.g., at a measurement point "b" shown in FIG. 1). A curve 96c represents an oxygen concentration at a part of the exhaust passage 7 downstream of the first catalyst 21 (between the first and second catalysts 21 and 22; e.g., a measurement point "c" shown in FIG. 1). A curve 96d represents an oxygen concentration in the exhaust passage 7 upstream of the first-passage connection portion 71b (e.g., at a measurement point "d" shown in FIG. 1).

From a comparison among the curves 96a, 96c, and 96d, it is understood that the oxygen concentration in the first passage 71 is higher than that in the exhaust passage 7. This shows that secondary air outside the engine 1 has been injected into the first passage 71. From a comparison among the curves 96b, 96c, and 96d, it is understood that the oxygen concentration in the second passage 72 is higher than that in the exhaust passage 7. From a comparison between the curves 96a and 96b, it is understood that the oxygen concentration in the second passage 72 is higher than that in the first passage 71 (at a position closer to the exhaust passage 7). Therefore, it is understood that secondary air outside the engine 1 has been injected into the second passage 72. If secondary air is injected into the second passage 72, this secondary air will be supplied to a portion between the first and second catalysts 21 and 22, and therefore the object of supplying secondary air can be achieved.

From a comparison between the curves 96c and 96d, it is understood that the oxygen concentration in the exhaust passage 7 upstream of the first-passage connection portion 71b (e.g., at the measurement point "d" shown in FIG. 1) is lower than the oxygen concentration in the exhaust passage 7 between the first and second catalysts 21 and 22 (e. g. , at the measurement point "c" shown in FIG. 1) . This shows that secondary air has been injected into the exhaust passage 7 downstream of the first catalyst 21. Generally, it is conceivable that the object of injecting secondary air into the second passage 72 will have been achieved if the oxygen concentration in the second passage 72 (e.g., at the measurement point "b") is higher than the oxygen concentration in the exhaust passage 7 upstream of the first-passage connection portion 71b (e.g., at the measurement point "d"). If this is confirmed, the object of supplying secondary air to the exhaust passage 7 between the first and second catalysts 21 and 22 will have been achieved.

As shown by reference numeral 97 in the curve 96c of FIG. 9C, the oxygen concentration is increased while substantially synchronizing with the timing of the generation of a positive pressure shown by reference numeral 95 of FIG. 9A (the generation of a positive pressure upstream of the divergent portion 43). This shows that secondary air injected into the first passage 71 has been supplied to the exhaust passage 7 between the first and second catalysts 21 and 22 through the second passage 72.

As described above, according to the present embodiment, a sufficient amount of secondary air can be supplied to a portion of the exhaust passage 7 downstream of the first catalyst 21 without using a special-purpose device that forcibly sends air to the exhaust passage 7. In other words, secondary air is injected from outside by use of a negative pressure generated by using the energy of exhaust gas, and secondary air injected thereinto is supplied to the downstream side below the first catalyst 21 likewise by use of a positive pressure generated by the energy of exhaust gas. The pump action is realized by use of the energy of exhaust gas in this way, and therefore the loss of engine output can be reduced.

Additionally, a great negative pressure can be generated in the exhaust passage 7 upstream of the divergent portion 43, and therefore the amplitude of exhaust pulsation can be enlarged. Therefore, even when the engine 1 is driven at a high rotational speed or driven in a high-load state, secondary air can be supplied to the exhaust passage 7 downstream of the first catalyst 21 by use of a great negative pressure as a result of the generation of a shock wave and a sufficient positive pressure generated by exhaust pulsation.

Another pumping system for supplying air can also be used together therewith. Even in this case, a load imposed on the pump can be reduced, and therefore the loss of engine output can be reduced. In the present embodiment, the energy loss of gas flowing through the flow passage 61 from the upstream end 71a to the downstream end 71b of the first passage 71 is smaller than the energy loss of gas flowing through the flow passage 62 from the downstream end 72b of the second passage 72 to the downstream end 71b of the first passage 71. In other words, the flow coefficient of the downstream end 71b of the first passage 71 when air is allowed to flow from the upstream end 71a of the first passage 71 while closing the second passage 72 is greater than the flow coefficient of the downstream end 71b of the first passage when air is allowed to flow from the downstream end 72b of the second passage while closing the first passage 71 upstream of the connection portion of the second passage 72. As a result, when a negative pressure is generated upstream of the divergent portion 43, secondary air can be reliably injected into the first passage 71 through the reed valve 74 of the first passage 71 without allowing air in the second passage 72 to flow backwardly. Therefore, when the exhaust passage 7 upstream of the divergent portion 43 reaches a positive pressure state after that, the secondary air injected thereinto can be supplied to the second passage 72.

Additionally, in the present embodiment, the exhaust system 50 includes the first and second catalysts 21 and 22 disposed in the exhaust passage 7 upstream of the downstream end 72b of the second passage 72 and in the exhaust passage 7 downstream of the downstream end 72b of the second passage 72, respectively. According to this arrangement, the oxygen concentration of exhaust gas supplied to the second catalyst 22 can be heightened. Therefore, the first catalyst 21 can be allowed to act chiefly as a reduction catalyst, whereas the second catalyst 22 can be allowed to act chiefly as an oxidation catalyst. If a three-way catalyst is applied to the first catalyst 21 and to the second catalyst 22, exhaust gas having a theoretical air fuel ratio is required to be guided by these catalysts in order that both a reduction reaction and an oxidation reaction may be performed. If the first catalyst 21 is allowed to function chiefly as a reduction catalyst, fuel-rich exhaust gas may be guided to the first catalyst 21. If the second catalyst 22 is allowed to function as an oxidation catalyst, it is preferable for exhaust gas whose air-fuel ratio has a lean tendency to be guided to the second catalyst 22. As a result, the first catalyst 21 and the second catalyst 22 can perform both the reduction reaction and the oxidation reaction in cooperation with each other, and therefore harmful components contained in the exhaust gas can be efficiently removed. Therefore, exhaust gas having a theoretical air fuel ratio is not necessarily required to be guided to the first catalyst 21, and therefore the window of an air-fuel ratio that can remove harmful components is widened. Therefore, the air-fuel ratio is not required to be strictly controlled.

On the other hand, if an air-fuel mixture having an air-fuel ratio closer to the theoretical air fuel ratio is supplied to the combustion chamber, the amount of burn-out fuel can be restrained. If an air-fuel ratio closer to the theoretical air fuel ratio is applied, there is a fear that exhaust gas will become high in temperature, and this high-temperature exhaust gas may cause the sintering of the catalysts 21 and 22. However, in the present embodiment, a new shock wave 35b generated in the divergent portion 43 generates a great negative pressure behind it. Because of this negative pressure, the adiabatic expansion of exhaust gas occurs, thereby making it possible to cool the exhaust gas according to the adiabatic cooling effect. In other words, the exhaust gas is cooled to the position of the first catalyst 21. Therefore, the use of an air-fuel mixture having an air-fuel ratio closer to the theoretical air fuel ratio makes it possible to simultaneously protect the catalysts 21 and 22 while restraining a fuel consumption and to detoxify harmful components. Of course, even if the engine 1 is driven in a high-load state or is driven at a high speed, the exhaust gas can be made low in pressure and in temperature, and therefore the catalysts 21 and 22 can be protected.

<Second Embodiment>

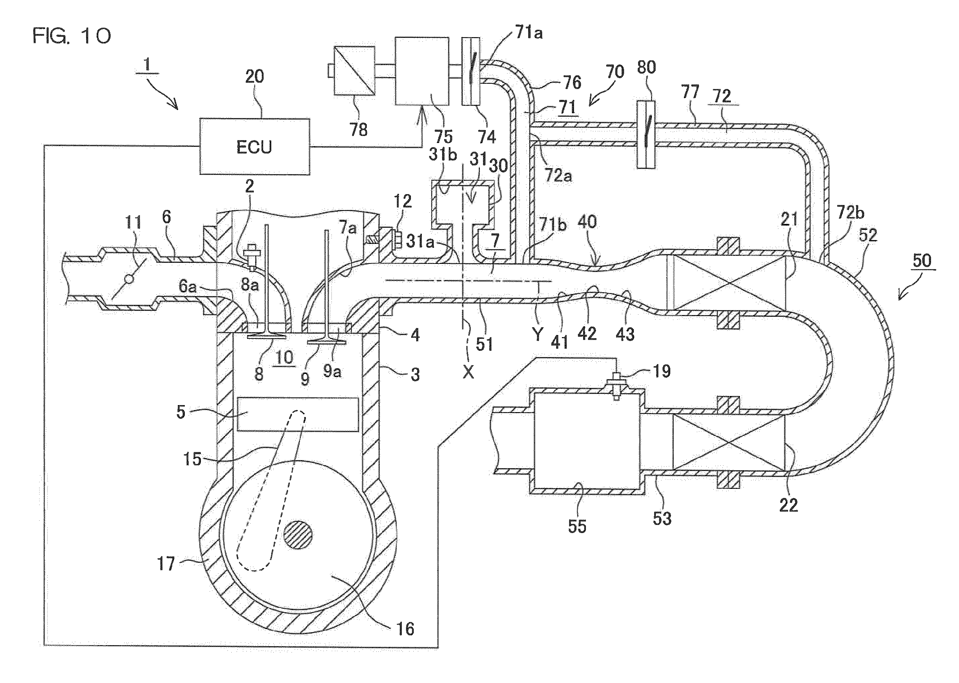

FIG. 10 is a sectional view showing an arrangement of an exhaust passage and so forth of an engine according to a second embodiment of the present invention. In FIG. 10, the same reference numeral is given to the corresponding component as in FIG. 1.
As in the first embodiment, the engine 1 according to the second embodiment includes a cylinder body 3, a cylinder head 4 disposed at one end thereof, and a piston 5 that reciprocates in the cylinder body 3, and these components define a combustion chamber 10. The cylinder head 4 is provided with an intake valve 8 that opens and closes an intake port 8a, an exhaust valve 9 that opens and closes an exhaust port 9a, and a valve driving device that drives the intake valve 8 and the exhaust valve 9. The engine 1 additionally includes an exhaust system 50 and a secondary air supply system 70 that supplies air to an exhaust passage 7 of the exhaust system 50.
The exhaust system 50 includes a first exhaust pipe 51 connected to the cylinder head 4, a second exhaust pipe 52 connected to the first exhaust pipe 51, and a third exhaust pipe 53 connected to the second exhaust pipe 52 , and these exhaust pipes 51, 52, and 53 define the exhaust passage 7. A first catalyst 21 and a second catalyst 22 are disposed in the exhaust passage 7 with a space therebetween. Abranch pipe 30 is disposed at an upstream portion of the first exhaust pipe 51. A convergent-divergent nozzle 40 is disposed between the branch pipe 30 and the first catalyst 21.
The secondary air supply system 70 includes a reed valve 74, a first secondary air supply pipe 76, and a second secondary air supply pipe 77 connected to the first secondary air supply pipe 76. The first secondary air supply pipe 76 defines a first passage 71 from the reed valve 74 to the exhaust passage 7. The second secondary air supply pipe 77 defines a second passage 72 from the first passage 71 to the exhaust passage 7 between the first and second catalysts 21 and 22.
In the present embodiment, a second reed valve 80 (check valve) is further disposed in the second passage 72. The reed valve 80 is arranged to admit an airflow running in a direction from an upstream end 72a to a downstream end 72b of the second passage 71 and to block an airflow running in the opposite direction. Arrangements other than those mentioned above are the same as in the first embodiment. Therefore, FIG. 1 to FIG. 9 relative to the first embodiment and a detailed description of the first embodiment are used in place of a detailed description of the second embodiment.
When a negative pressure is generated in the exhaust passage 7 upstream of the divergent portion 43, the reed valve 74 of the first passage 71 is opened, and outside air is injected into the first passage 71. At this time, the reed valve 80 of the second passage 72 reaches a closed state, and an airflow running from the downstream end 72b to the upstream end 72a of the second passage 72 is blocked. On the other hand, when a positive pressure is generated in the exhaust passage 7 upstream of the divergent portion 43, the reed valve 74 of the first passage 71 reaches a closed state, and the reed valve 80 of the second passage 72 is opened. As a result, secondary air injected into the first passage 71 flows through the second passage 72, and is supplied to the exhaust passage 7 downstream of the first catalyst 21. In this way, secondary air can be supplied to the exhaust passage 7 downstream of the first catalyst 21 by means of a pump action using the negative pressure and the positive pressure generated in the exhaust passage 7. Moreover, air can be reliably restrained from flowing backwardly in the second passage 72 by means of the reed valve 80 disposed in the second passage 72, and therefore secondary air can be efficiently supplied.
Thus, according to the present embodiment, the direction of an airflow in the second passage 72 is limited to the direction from the upstream end to the downstream end thereof. In other words, the backward flow of secondary air can be prevented. As a result, secondary air can be reliably injected from the upstream end of the first passage 71 when a negative pressure is generated upstream of the divergent portion 43, and secondary air can be reliably supplied to the first and second catalysts 21 and 22 when a positive pressure is generated upstream of the divergent portion 43.

<Third Embodiment>

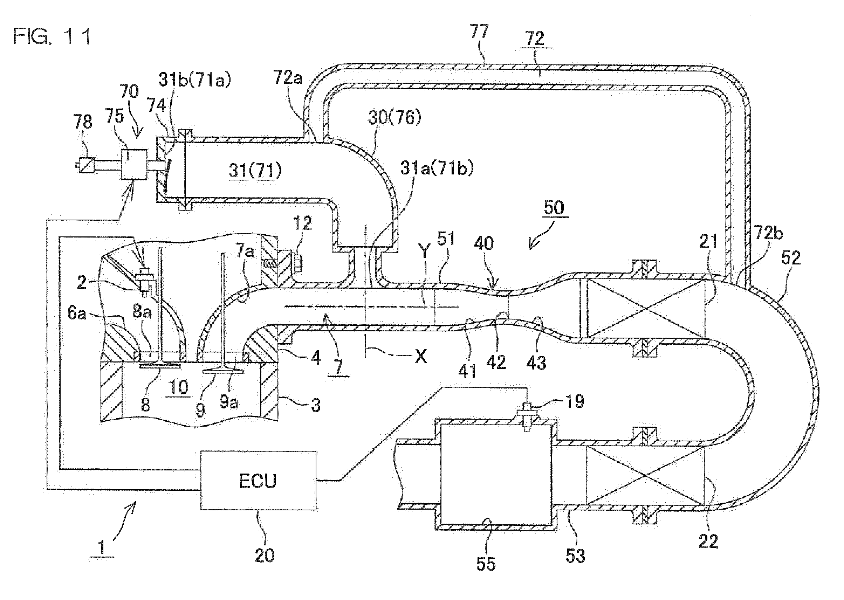

FIG. 11 is a sectional view showing an arrangement of an exhaust passage and so forth of an engine according to a third embodiment of the present invention. In FIG. 11, the same reference numeral is given to the corresponding component as in FIG. 1.
As in the first embodiment, the engine 1 according to the third embodiment includes a cylinder body 3, a cylinder head 4 disposed at one end thereof, and a piston 5 (see FIG. 1) that reciprocates in the cylinder body 3, and these components define a combustion chamber 10. The cylinder head 4 is provided with an intake valve 8 that opens and closes an intake port 8a, an exhaust valve 9 that opens and closes an exhaust port 9a, and a valve driving device that drives the intake valve 8 and the exhaust valve 9. The engine 1 additionally includes an exhaust system 50 and a secondary air supply system 70 that supplies air to an exhaust passage 7 of the exhaust system 50.

The exhaust system 50 includes a first exhaust pipe 51 connected to the cylinder head 4, a second exhaust pipe 52 connected to the first exhaust pipe 51, and a third exhaust pipe 53 connected to the second exhaust pipe 52, and these exhaust pipes 51, 52, and 53 define the exhaust passage 7. A first catalyst 21 and a second catalyst 22 are disposed in the exhaust passage 7 with a space therebetween. Abranch pipe 30 is disposed at an upstream portion of the first exhaust pipe 51. A convergent-divergent nozzle 40 is disposed between the branch pipe 30 and the first catalyst 21.

In the third embodiment, the branch pipe 30 is used also as a first secondary air supply pipe 76 that defines the first passage 71. In other words, the first passage 71 that is a special-purpose one is abolished, and the branch portion 31 is used also as the first passage 71. Yet in other words, the first passage 71 is used also as the branch portion 31. The second secondary air supply pipe 77 is connected to the branch pipe 30 used also as the first secondary air supply pipe 76, and defines the second passage 72 from the branch portion 31 (the first passage 71) to the exhaust passage 7 between the first and second catalysts 21 and 22. Arrangements other than those mentioned above are the same as in the first embodiment. Therefore, FIG. 1 to FIG. 9 relative to the first embodiment and a detailed description of the first embodiment are used in place of a detailed description of the third embodiment.

In the third embodiment, a reed valve 74 is connected to an end of the branch pipe 30 that is on the side opposite to the exhaust passage 7, and furthermore an air amount control valve 75 and an air cleaner 78 are connected to the upstream side thereof. The reed valve 74 forms a reflecting portion 31b of the branch portion 31. In other words, a shock wave traveling from the exhaust passage 7 branches to the branch portion 31 (the first passage 71), is then reflected at the reed valve 74 (the reflecting portion 31b) that is in a closed state, and is returned to the exhaust passage 7 again through the branch portion 31 (the first passage 71). This shock wave collides with exhaust gas proceeding late through the exhaust passage 7, and heightens the pressure of the exhaust gas.

When the exhaust valve 9 is opened, the reed valve 74 is closed, and can reflect a shock wave. When a negative pressure is generated by the action of the convergent-divergent nozzle 40 in the exhaust passage 7, the reed valve 74 is opened, and secondary air from outside can be injected into the first passage 71. Thereafter, when a positive pressure is generated by exhaust pulsation in the exhaust passage 7, the secondary air injected into the first passage 71 is supplied to the exhaust passage 7 between the first and second catalysts 21 and 22 through the second passage 72. In this way, also in the present embodiment, a sufficient amount of air can be supplied to the exhaust passage 7 downstream of the first catalyst 21.

Additionally, according to the present embodiment, there is no need to form a passage that functions entirely as the branch portion 31 or a passage that functions entirely as the first passage 71. Therefore, the cost can be made lower than in an arrangement using the special-purpose branch portion 31 and the special-purpose first passage 71 (e.g., the first embodiment).

<Fourth Embodiment>

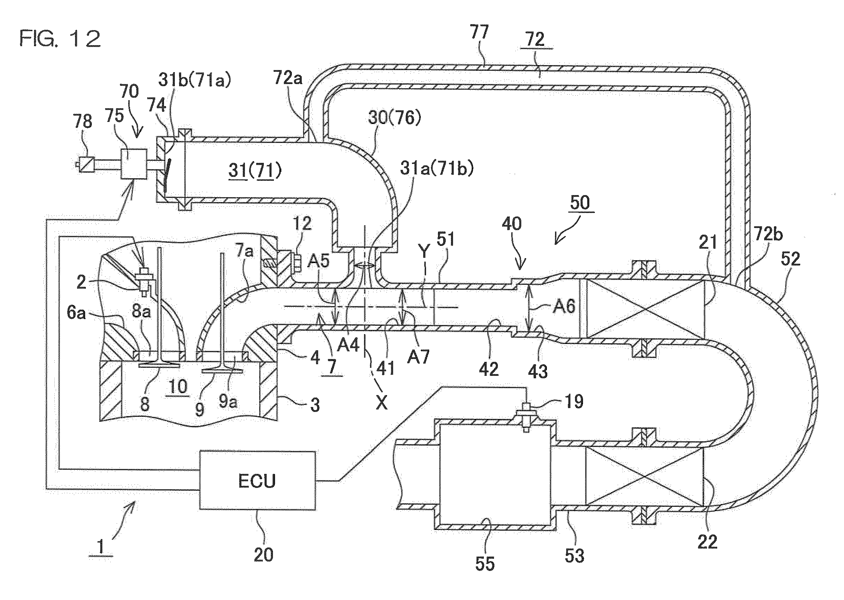

FIG. 12 is a sectional view for describing an arrangement of an exhaust passage and so forth of an engine according to a fourth embodiment of the present invention. In FIG. 12, the same reference numeral is given to the corresponding component as in FIG. 11.

As in the third embodiment, an engine 1 according to the fourth embodiment includes a cylinder body 3, a cylinder head 4 disposed at one end thereof, and a piston 5 (see FIG. 1) that reciprocates in the cylinder body 3, and these components define a combustion chamber 10. The cylinder head 4 is provided with an intake valve 8 that opens and closes an intake port 8a, an exhaust valve 9 that opens and closes an exhaust port 9a, and a valve driving device that drives the intake valve 8 and the exhaust valve 9. The engine 1 additionally includes an exhaust system 50 and a secondary air supply system 70 that supplies air to an exhaust passage 7 of the exhaust system 50.

The exhaust system 50 includes a first exhaust pipe 51 connected to the cylinder head 4, a second exhaust pipe 52 connected to the first exhaust pipe 51, and a third exhaust pipe 53 connected to the second exhaust pipe 52, and these exhaust pipes 51, 52, and 53 define the exhaust passage 7. A first catalyst 21 and a second catalyst 22 are disposed in the exhaust passage 7 with a space therebetween. Abranchpipe 30 is disposed at an upstream portion of the first exhaust pipe 51.

The branch pipe 30 is used also as the first secondary air supply pipe 76 that defines the first passage 71. The second secondary air supply pipe 77 is connected to the branch pipe 30 used also as the first secondary air supply pipe 76, and defines a second passage 72 ranging from the branch portion 31 (the first passage 71) to the exhaust passage 7 between the first and second catalysts 21 and 22.

In the fourth embodiment, the branch pipe 30 is used as a part of a convergent-divergent nozzle. Arrangements other than this one are the same as in the third embodiment (see FIG. 11). Therefore, FIG. 1 to FIG. 9 of the first embodiment, FIG. 11 of the third embodiment, and a detailed description of these embodiments are used in place of a detailed description of the fourth embodiment.

In the first to third embodiments, the convergent portion 41, the throat portion 42, and the divergent portion 43 are formed in the exhaust passage 7 downstream of the branch portion 31. However, as a result of the continuation of diligent research, the present inventor has thought of a structure that is simpler and by which the same effect can be obtained.

In the present embodiment, in order to generate a traveling shock wave 35b that is a new shock wave, the branch portion 31 is disposed in which a shock wave 35 generated at an initial stage of an exhaust stroke is reflected and is allowed to again propagate through the exhaust passage 7. When this branch portion 31 is seen from a different point of view, the exhaust passage 7 becomes greater in its cross-sectional area of the flow passage at the position of the branch portion 31. Its cross-sectional area of the flow passage becomes smaller downstream of that position. In other words, the convergent portion 41 and the throat portion 42 are defined by the branch portion 31.

For example, if the cross-sectional area A5 of the flow passage of the exhaust passage 7 upstream of a branch-portion inlet 31a is substantially equal to the cross-sectional area A7 of the flow passage of the exhaust passage 7 downstream of the branch-portion inlet 31a, the following relation is established. In detail, the cross-sectional area of the flow passage obtained by adding the cross-sectional area A5 of the flow passage of a part of the exhaust passage 7 located upstream of the branch-portion inlet 31a and the cross-sectional area A4 of the flow passage of the branch portion 31 together is greater than the cross-sectional area A7 of the flow passage of a part of the exhaust passage 7 located downstream of the inlet 31a. The relation A4+A5>A7 is established. Therefore, the convergent portion 41 and the throat portion 42 can be regarded as being formed downstream of the inlet 31a. Therefore, the convergent-divergent nozzle 40 can be substantially formed merely by providing the divergent portion 43 downstream of the inlet 31a. "A6" represents the cross-sectional area of the flow passage of the divergent portion 43, and the relation A7<A6 is established. The portion between the inlet 31a and the divergent portion 43 is the throat portion 42. The throat portion 42 may be lengthened in a direction of the flow passage in this way. The convergent portion 41 and the divergent portion 43 are not necessarily required to be arranged so that the cross-sectional area of the flow passage changes smoothly (continuously) toward the downstream side, and these may be arranged so that the cross-sectional area of the flow passage changes step by step.

The arrangement of the fourth embodiment can be applied to those of the first and second embodiments. In this case, the convergent-divergent nozzle 40 can be substantially formed by providing the divergent portion 43 downstream of a connection portion 71b of a first passage 71. In this arrangement, a change in the cross-sectional area of the flow passage occurs not only in the branch portion 31 but also in a branch portion to the first passage 71, and therefore it is also conceivable that the convergent portion 41 and the throat portion 42 are formed in the exhaust passage 7 downstream of the connection portion 71b of the first passage. In this case, the part of the exhaust passage 7 between the connection portion 71b and the divergent portion 43 is the throat portion 42.

<Fifth Embodiment>

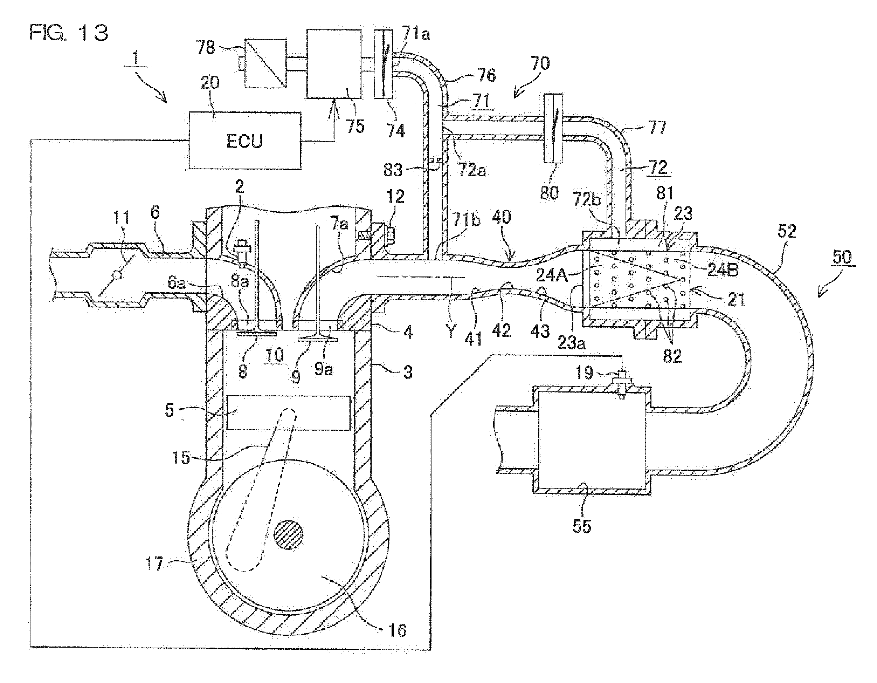

FIG. 13 is a sectional view for describing an arrangement of an exhaust system and so forth of an engine according to a fifth embodiment of the present invention. In FIG. 13, the same reference numeral is given to the corresponding component as in FIG. 11, and a description of the corresponding component is omitted.

In the present embodiment, one catalyst 23 is disposed in the exhaust passage 7 downstream of the convergent-divergent nozzle 40. The downstream end 72b of the second passage 72 is connected to a side surface of the catalyst 23. In other words, a cylindrical air injection space 81 by which substantially the whole area of the side surface of the catalyst 23 is opened is formed at the downstream end 72b of the second passage 72. On the other hand, many air injection holes 82 through which air is injected inwardly are formed in the side surface of the catalyst 23.

Secondary air supplied from the first passage 71 to the second passage 72 enters the inside of the catalyst 23 from the air injection space 81. The secondary air that has entered the inside of the catalyst 23 flows toward a downstream end of the catalyst 23 while mixing with exhaust gas injected from an upstream end 23a of the catalyst 23. As a result, in the inside of the catalyst 23, a cone-shaped area 24A that tapers from the upstream end 23a of the catalyst 23 toward the downstream side becomes a low oxygen-concentration area in which exhaust gas flowing from the combustion chamber 10 is dominant. The remaining area 24B excluding the area 24 becomes a high oxygen-concentration area to which secondary air has been supplied sufficiently. The catalyst 23 functions as a reduction catalyst in the low oxygen-concentration area 24A, and functions as an oxidation catalyst in the high oxygen-concentration area 24B. The single catalyst 23 can be used both as a reduction catalyst and as an oxidation catalyst in this way, and therefore exhaust gas from the combustion chamber 10 can be satisfactorily detoxified. Therefore, the purification efficiency of exhaust gas can be heightened. Additionally, the single catalyst 23 is enough to perform functions, and therefore the thermal capacity of the whole of the exhaust system 50 can be reduced. Therefore, when the engine 1 is started, the catalyst 23 can be promptly activated, and therefore exhaust gas can be satisfactorily purified immediately after the start of the engine.

Another feature of the present embodiment is that an orifice 83 is provided at a place between the connection portion through which the first passage 71 and the second passage 72 are connected together and the downstream end 71b of the first passage 71. As a result, exhaust gas from the combustion chamber 10 can be prevented from entering the first passage 71 without influencing the supply of secondary air. As a result, the oxygen concentration of air supplied to the second passage 72 can be heightened. For example, the orifice 83 may be a plate-like orifice that has an opening at its center.

A similar orifice can be provided in the first passage 71 not only in the present embodiment but also in the above-mentioned or below-mentioned embodiments.

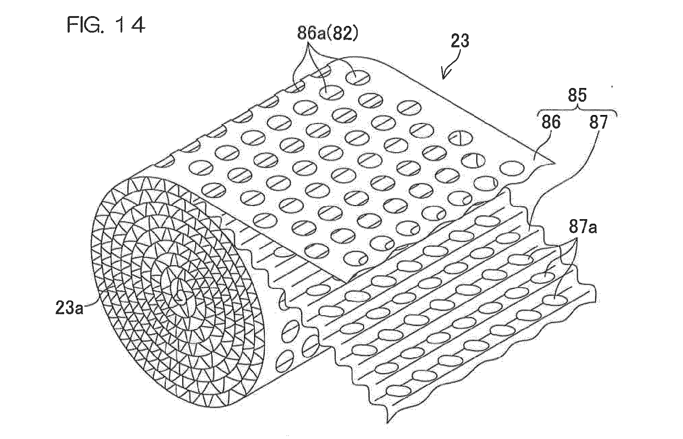

FIG. 14 is a pictorial perspective view for describing an arrangement example of the catalyst 23. The catalyst 23 has a honeycomb-like metal carrier 85. The metal carrier 85 forms a honeycomb structure by alternately piling a flat foil 86 having holes and a wave foil 87 having holes on each other. More specifically, a belt-like flat foil 86 and a belt-like wave foil 87 are piled up, and are rolled into a cylindrical state, thereby forming the metal carrier 85 having a cylindrical honeycomb structure. The flat foil 86 is produced by making many air holes 86a in a flat metallic foil so that the holes are evenly dispersed. The wave foil 87 is produced by making many air holes 87a in, for example, a metallic foil having a striped wave form so that the holes are evenly dispersed. The flat foil 86 is disposed on the outermost peripheral surface of the catalyst 23, and the air hole 86a appearing on the outermost peripheral surface is equivalent to the above-mentioned air injection hole 82.

<Sixth Embodiment>

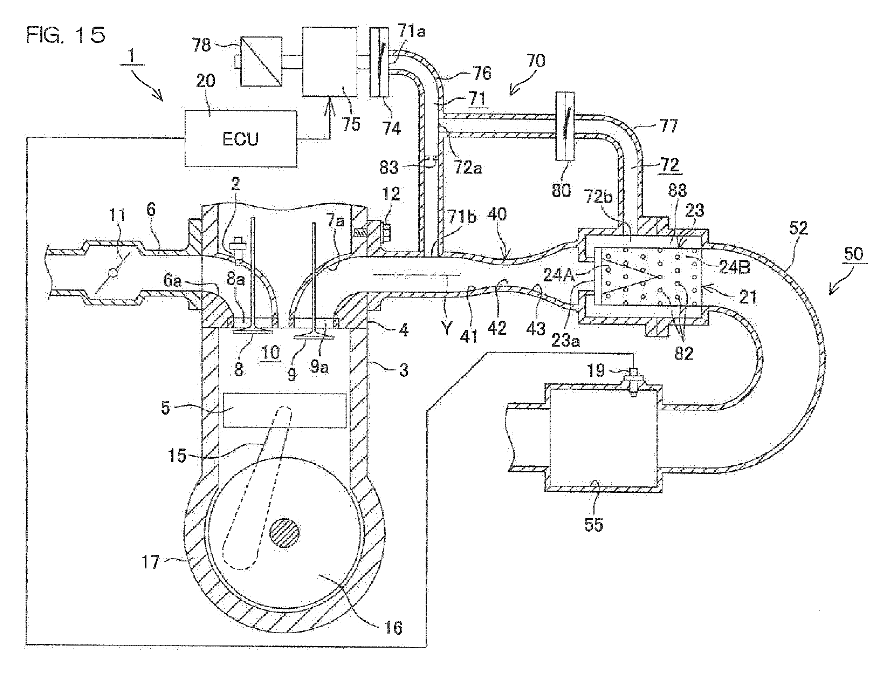

FIG. 15 is a sectional view for describing an arrangement of an exhaust system and so forth of an engine according to a sixth embodiment of the present invention. In FIG. 15, the same reference numeral is given to the corresponding component as in FIG. 13, and a description of the corresponding component is omitted.

In the present embodiment, the downstream end 72b of the second passage 72 is connected to the side surface of the catalyst 23 and to an outer peripheral area of the upstream end 23a of the catalyst 23. In detail, a cylindrical air injection space 88 that opens substantially the whole area of the side surface of the catalyst 23 and that opens an outer peripheral part of the upstream end 23a of the catalyst 23 is formed at the downstream end 72b of the second passage 72. The arrangement of the catalyst 23 is as above.

Secondary air supplied from the first passage 71 to the second passage 72 enters the inside of the catalyst 23 from the air injection space 88. In other words, secondary air enters the inside of the catalyst 23 from the side surface of the catalyst 23 and from the outer peripheral area of the upstream end 23a of the catalyst 23. The secondary air that has entered the inside of the catalyst 23 flows toward the downstream end of the catalyst 23 while mixing with exhaust gas injected from a central area of the upstream end 23a of the catalyst 23. As a result, in the inside of the catalyst 23, a cone-shaped area 24A that tapers from the central area of the upstream end 23a of the catalyst 23 toward the downstream side becomes a low oxygen-concentration area in which exhaust gas flowing from the combustion chamber 10 is dominant. The remaining area 24B excluding the area 24 becomes a high oxygen-concentration area to which secondary air has been supplied sufficiently. The catalyst 23 functions as a reduction catalyst in the low oxygen-concentration area 24A, and functions as an oxidation catalyst in the high oxygen-concentration area 24B. The single catalyst 23 can be used both as a reduction catalyst and as an oxidation catalyst in this way. Secondary air is also injected from the outer peripheral area of the upstream end 23a of the catalyst 23, and therefore the low oxygen-concentration area 24 becomes smaller than in the fifth embodiment. In other words, the high oxygen-concentration area 25 becomes greater than in the fifth embodiment. Therefore, a sufficient amount of secondary air can be supplied to the catalyst 23, and therefore exhaust gas from the combustion chamber 10 can be satisfactorily detoxified.

<Seventh Embodiment>

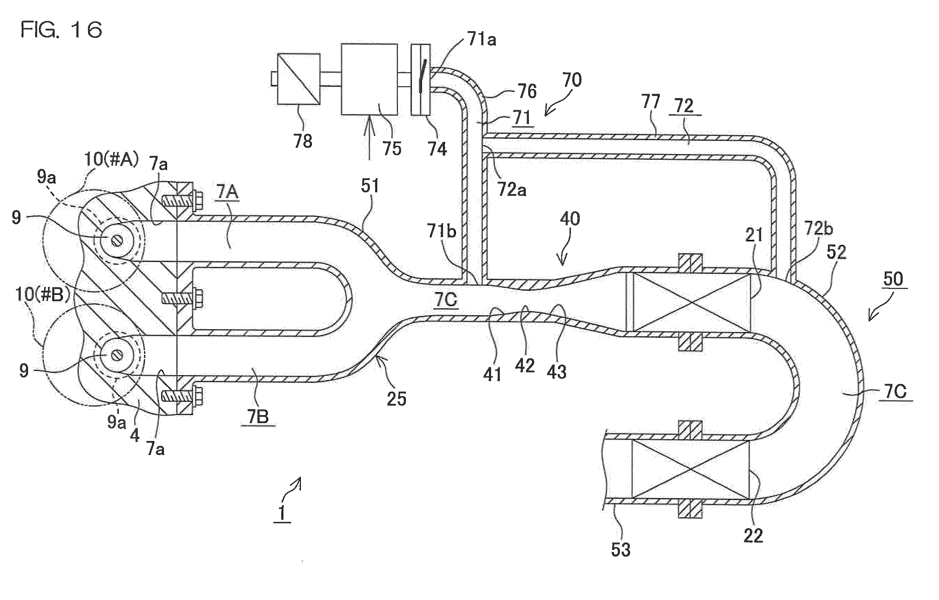

FIG. 16 is a schematic view showing an arrangement of an exhaust system of an engine according to a seventh embodiment of the present invention. In FIG. 16, the same reference numeral is given to the corresponding component as in FIG. 1. The fifth embodiment is an example in which one embodiment of the present invention is applied to a multi-cylinder engine.

An engine 1 according to the seventh embodiment has a plurality of cylinders #A and #B. Each of the cylinders #A and #B includes a cylinder body 3 (see FIG. 1), a cylinder head 4 disposed at one end thereof, and a piston 5 (see FIG. 1) that reciprocates in the cylinder body 3, and these components define a combustion chamber 10. The cylinder head 4 is provided with an intake valve 8 (see FIG. 1) that opens and closes an intake port 8a (see FIG. 1), an exhaust valve 9 that opens and closes an exhaust port 9a, and a valve driving device that drives the intake valve 8 (see FIG. 1) and the exhaust valve 9. The engine 1 additionally includes an exhaust system 50 and a secondary air supply system 70 that supplies air to an exhaust passage 7 of the exhaust system 50.

The exhaust system 50 includes a first exhaust pipe 51 connected to the cylinder head 4, a second exhaust pipe 52 connected to the first exhaust pipe 51, and a third exhaust pipe 53 connected to the second exhaust pipe 52. These exhaust pipes 51, 52, and 53 define the exhaust passage 7 (7A, 7B, 7C).

In the present embodiment, the first exhaust pipe 51 defines an individual exhaust passage 7A and an individual exhaust passage 7B that are connected to exhaust ports 9a of the plurality of combustion chambers 10, respectively. These individual exhaust passages 7A and 7B gather at a collecting portion 25, and lead to a collecting exhaust passage 7C. The convergent-divergent nozzle 40 is disposed at the collecting exhaust passage 7C. A first catalyst 21 and a second catalyst 22 are disposed in the collecting exhaust passage 7C downstream of the convergent-divergent nozzle 40 with a space therebetween. A first secondary air supply pipe 76 that defines the first passage 71 is connected to the collecting exhaust passage 7C between the collecting portion 25 and the convergent-divergent nozzle 40. An upstream end of a second secondary air supply pipe 77 that defines the second passage 72 is connected to the first secondary air supply pipe 76. A downstream end of the second secondary air supply pipe 77 is connected to a portion between the first and second catalysts 21 and 22, i.e., is connected to the collecting exhaust passage 7C downstream of the first catalyst 21. Arrangements other than those mentioned above are the same as in the first embodiment.

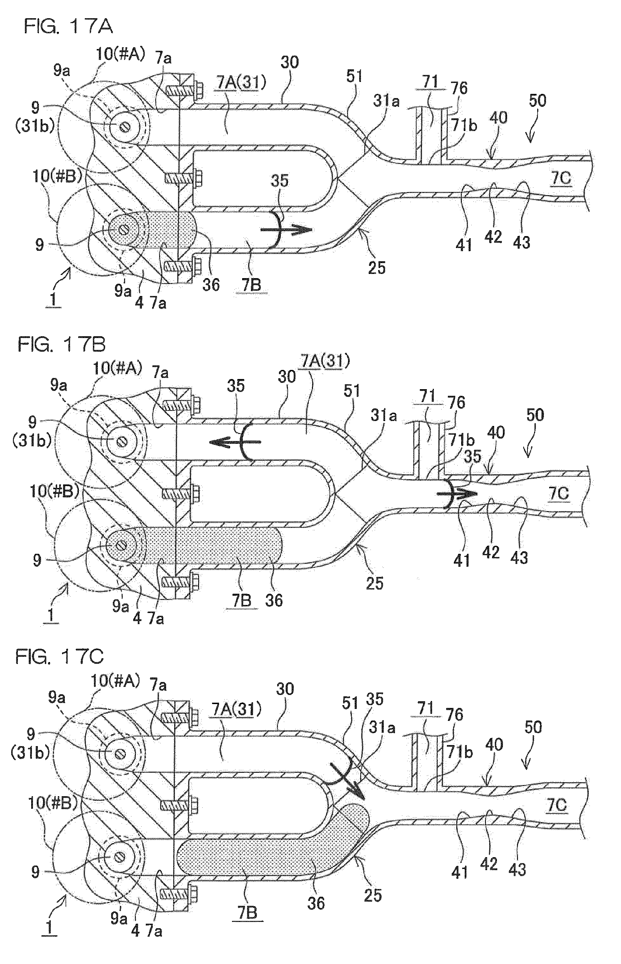

FIG. 17A to FIG. 17C are each a schematic view showing the operation of the engine according to the seventh embodiment. When an exhaust port 9a of a cylinder #B is opened, the individual exhaust passage 7A of another cylinder #A whose exhaust port 9a is closed functions as a branch portion 31. In other words, when an exhaust port 9a of a cylinder #B is opened, exhaust gas 36 is discharged from this exhaust port 9a, and a shock wave 35 is generated, and these propagate through the individual exhaust passage 7B (see FIG. 17A). The shock wave 35 branches at the collecting portion 25, and travels into the individual exhaust passage 7A of another cylinder #A. The shock wave 35 that has branched thereat propagates through the individual exhaust passage 7A toward the upstream side (see FIG. 17B), and is reflected by the exhaust valve 9 (in a closed state) of the cylinder #A. In other words, the exhaust valve 9 being in a closed state functions as a reflecting portion 31b. The shock wave 35 reflected thereby propagates through the individual exhaust passage 7A toward the downstream side, then reaches the collecting portion 25 again (see FIG. 17C), and collides with exhaust gas 36. As a result, pressure at an inlet of the convergent-divergent nozzle 40 is heightened, and a new shock wave is generated at the divergent portion 43.

Outside secondary air is injected into the first passage 71 by a negative pressure generated as a result of the generation of this new shock wave. Thereafter, when the collecting exhaust passage 7C upstream of the divergent portion 43 reaches a positive pressure state by means of exhaust pulsation subsequent thereto, the secondary air injected into the first passage 71 is supplied to the second passage 72. As a result, the secondary air is supplied to the collecting exhaust passage 7C downstream of the first catalyst 21.

Thus, the same operation as the operation described with reference to FIG. 4A to FIG. 4C is realized by using the individual exhaust passages 7A and 7B of the cylinders whose exhaust ports 9a are closed also as the branch portion 31. The pipe passage length of the individual exhaust passage 7A or 7B of each cylinder is designed so that a reflected shock wave 35 and exhaust gas 36 collide with each other at the collecting portion 25.

The cylinders #A and #B in which exhaust gas is collected are a pair of cylinders having a relationship in which when the exhaust port 9a of one cylinder is in an open state, the exhaust port 9a of the other cylinder reaches a closed state. More specifically, in a four-cylinder engine that has cylinders #1, #2, #3, and #4, let the firing order be cylinder #1-cylinder #3-cylinder #4-cylinder #2. In this case, a pair of cylinder #1 and cylinder #4 having a difference of 360 degrees in the ignition timing is equivalent to the pair of cylinders #A and #B. Likewise, a pair of cylinder #2 and cylinder #3 having a difference of 360 degrees in the ignition timing is equivalent to the pair of cylinders #A and #B. In other words, in a four-cylinder engine, two cylinder pairs are each corresponding to the two cylinders #A and #B.

<Other Embodiments>

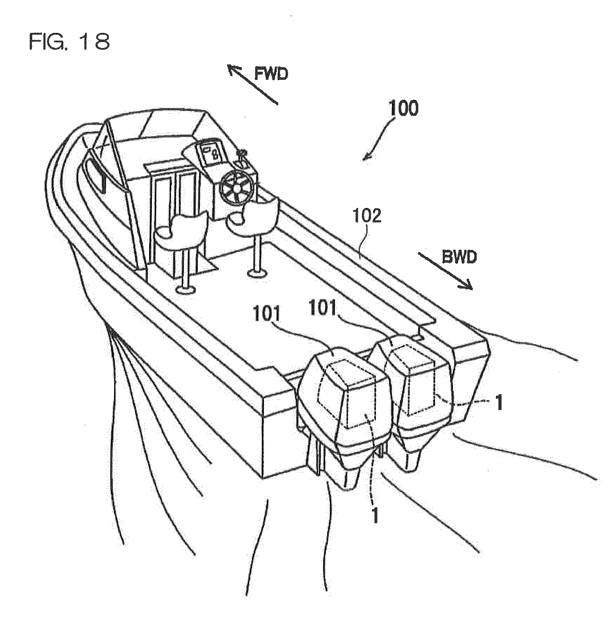

FIG. 18 is a perspective view illustrating an example of a vessel in which an engine according to an embodiment of the present invention is mounted. In detail, the vessel 100 includes a hull 102 and an outboard motor 101 that has the engine 1 according to one embodiment of the present invention. In this example, two outboard motors 101 are mounted in the hull 102. For example, the outboard motor 101 includes the engine 1, a propeller (not shown) serving as a thrust generatingmember, and a transmitting mechanism (not shown) that transmits the driving force of the engine 1 to the propeller. For example, the transmitting mechanism includes a drive shaft that is rotated by the driving force of the engine 1, a propeller shaft that is connected to the propeller, and a clutch disposed between the drive shaft and the propeller shaft.

An inboard motor and an inboard-outboard motor, besides the outboard motor 101, can be mentioned as a thrust generating unit mounted in the vessel 100. Additionally, for example, a jet pump unit in which an impeller rotated by the engine is disposed in a water flow passage may be used as a thrust generating unit for the vessel 100.

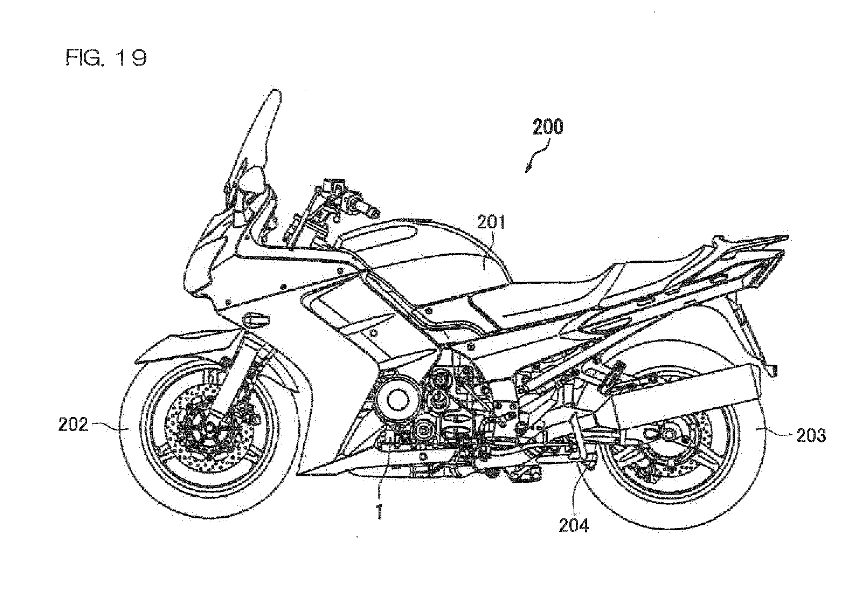

FIG. 19 is a perspective view illustrating a vehicle in which an engine according to one embodiment of the present invention is mounted. In detail, a motorcycle 200 that is an example of the vehicle includes a vehicle body 201, a front wheel 202 and a rear wheel 203 attached respectively to the front and the rear of the vehicle body 201, and an engine 1 according to one embodiment of the present invention. The engine 1 is disposed at the center of the vehicle body 201. A driving force generated by the engine 1 is transmitted to the rear wheel 203 by a transmitting mechanism 204.

Additionally, the engine of the present invention is applied as an engine for an electric generator or for a chain saw. Of course, no limitations are imposed on an object to which the engine of the present invention is applied.

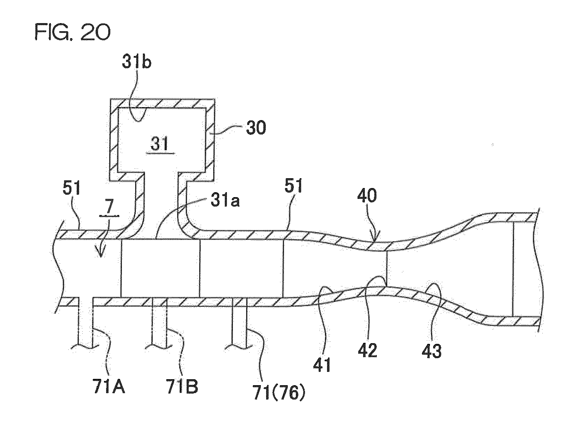

FIG. 20 is a sectional view of an exhaust passage and so forth showing a modification of the embodiment. In the first embodiment, as shown again in FIG. 20, the first secondary air supply pipe 76, i.e., the first passage 71 is connected to the exhaust passage 7 downstream of the branch portion 31. However, the connection position of the first passage 71 may be upstream of the branch portion 31 (see reference numeral 71A), and may be connected thereto at the same position (see reference numeral 71B) as the branch portion 31.

Additionally, although the engine in which one exhaust port is provided for one combustion chamber is shown in the above embodiment, a plurality of exhaust ports may be provided for one combustion chamber. Additionally, although an example in which one convergent-divergent nozzle is provided for one combustion chamber is shown, two or more nozzles may be provided for one combustion chamber. As a matter of course, these modifications can be applied to a multi-cylinder engine that has a plurality of combustion chambers. Additionally, the present invention can be applied to various engines.

Additionally, although an arrangement in which one branch portion is provided for one exhaust passage is shown in the above embodiment, a plurality of branch portions may be provided for one exhaust passage. For example, if the first passage 71 is designed so as to satisfy the condition (see FIG. 5) of the branch portion 31 in the arrangement of the first embodiment (see FIG. 1), this arrangement will substantially have a plurality of branch portions. Additionally, a branch portion that has an annular passage may be provided by connecting ends of a plurality of branch portions that branch from the same position of the exhaust passage 7 together. In that case, shock waves that have propagated through the branch portions collide with each other, and are reflected. In this case, a portion at which the branch portions are connected together (i.e., portion at which shock waves collide with each other) serves as a reflecting part. The reflecting part can be realized even if a member such as a wall does not necessarily exist.

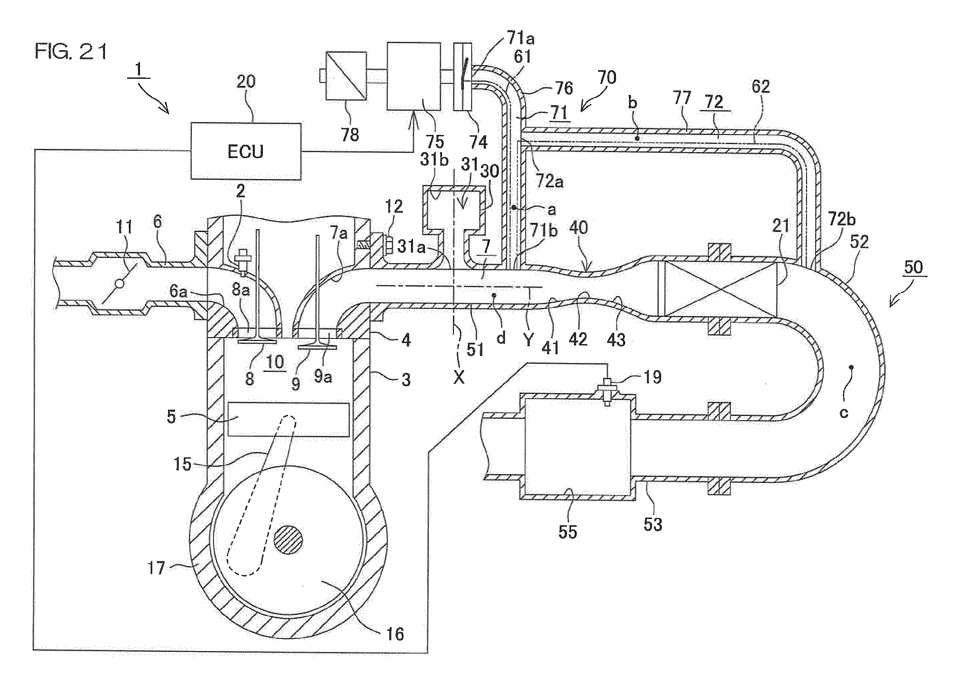

Additionally, although the first and second catalysts 21 and 22 are provided in the above embodiment, the second catalyst 22 may be removed as in the modification of the first embodiment shown in FIG. 21. Likewise, in this case, the upstream side portion of the first catalyst 21 is allowed to act as a reduction catalyst by the supply of secondary air to the downstream side below the first catalyst 21 while the downstream side part thereof is allowed to act as an oxidation catalyst. In other words, when secondary air injected from the second passage 72 is guided to the first catalyst 21 by means of exhaust pulsation, the air ratio in exhaust gas is raised. As a result, the downstream side portion of the first catalyst 21 functions as an oxidation catalyst. Exhaust gas can be efficiently purified by using secondary air in this way. The same modification can be made in the second to fourth embodiments and in the sixth embodiment.

Additionally, although the air amount control valve 75 and the air cleaner are provided upstream of the reed valve 74 of the first passage 71 in the above embodiment, one of or both of these components may be removed. Additionally, although an arrangement in which the reed valve 74 is disposed at the upstream end of the first passage 71 is shown in the above embodiment, the reed valve 74 may be disposed between the upstream end and the downstream end of the first passage 71. Likewise, in this case, it is preferable to dispose the upstream end 72a of the second passage 72 between the reed valve 74 and the exhaust passage 7 in the first passage 71.

Additionally, the catalyst shown in FIG. 14 can also be used as the first catalyst 21 and/or as the second catalyst 22 in the embodiments other than the fifth and sixth embodiments. It should be noted that the first catalyst 21 and/or the second catalyst 22 are not required to have a catalyst carrier that has an air inlet in its side surface, and are required to be arranged so that exhaust gas can be injected from the upstream end.

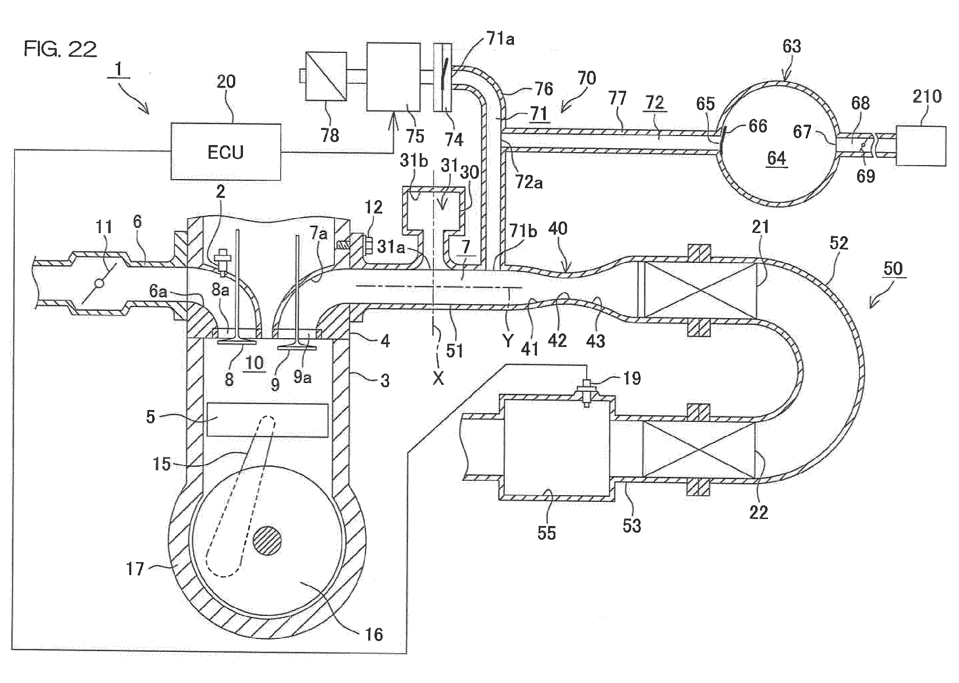

Additionally, although an arrangement in which secondary air is supplied to the exhaust passage through the second passage 72 has been described in the above embodiment, the supply destination of secondary air is not limited to the exhaust passage. For example, in one embodiment shown in FIG. 22, the downstream end of the second passage 72 is connected to an inlet 65 of an accumulator tank 63. The accumulator tank 63 defines a containing space 64 capable of containing high-pressure air that is higher than atmospheric pressure. The accumulator tank 63 has the inlet 65 through which air is injected, a one-way valve 66 that opens and closes the inlet 65, and an outlet 67 from which high-pressure air in the containing space 64 is discharged. The one-way valve 66 is arranged so as to be opened when air pressure in the second passage 72 is higher than air pressure in the containing space 64 and so as to admit air into the containing space 64 from the second passage 72. The one-way valve 66 is arranged so as to be kept in a closed state when air pressure in the containing space 64 is greater than air pressure in the second passage 72 and, as a result, so as to prevent air from flowing out from the containing space 64 to the second passage 72.

This arrangement makes it possible to accumulate pressure because air in the containing space 64 is pressurized (compressed). In other words, exhaust gas energy can be converted into pressure energy and be accumulated. An upstream end of a high-pressure air supply passage 68 is connected to the outlet 66. An output control valve 69 is disposed between both ends of the high-pressure air supply passage 68. The output of high-pressure air (compressed air) accumulated in the accumulator tank 64 can be controlled by opening and closing the output control valve 69. The downstream end of the high-pressure air supply passage 68 is connected to a device 210 that operates by using high-pressure air. An example of this device 210 is a manipulation aid device typified by a brake booster and a clutch booster.

Additionally, an air suspension device and an alarm device can be mentioned as other examples of the device 210.

Although the embodiments of the present invention have been described in detail, these are specific examples merely used to clarify the technical contents of the present invention, and the present invention should not be understood as being limited to these specific examples, and the scope of the present invention is limited only by the appended claims. The present application corresponds to Japanese Patent Application No. 2009-281823 filed in the Japan Patent Office on December 11, 2009, and the entire disclosure of the application is incorporated herein by reference.

DESCRIPTION OF SIGNS

| | |
|---|---|
| 1 | Engine |
| 7 | Exhaust passage |
| 9 | Exhaust valve |
| 9a | Exhaust port |
| 10 | Combustion chamber |
| 20 | ECU |
| 21 | First catalyst |
| 22 | Second catalyst |
| 23 | Catalyst |
| 24A | Low oxygen-concentration area |
| 24B | High oxygen-concentration area |
| 30 | Branch pipe |
| 31 | Branch portion |
| 35 | Shock wave |
| 35b | New shock wave (Traveling shock wave) |
| 35c | Expansion wave |
| 36 | Exhaust gas |
| 40 | Convergent-divergent nozzle |
| 41 | Convergent portion |
| 42 | Throat portion |
| 43 | Divergent portion |
| 50 | Exhaust system |
| 63 | Accumulator tank |
| 68 | High-pressure air supply passage |
| 69 | Output control valve |
| 70 | Secondary air supply system |
| 71 | First passage |
| 72 | Second passage |
| 74 | First reed valve |
| 76 | First secondary air supply pipe |
| 77 | Second secondary air supply pipe |
| 80 | Second reed valve |
| 81 | Cylindrical air injection space |
| 82 | Air injection hole |
| 83 | Orifice |
| 85 | Metal carrier |
| 88 | Air injection space |
| 100 | Vessel |
| 101 | Outboard motor |
| 200 | Motorcycle |
| 210 | Device that operates by using high-pressure air |

**Claims**

**1.** An engine comprising:

a combustion chamber that has an exhaust port;
an exhaust valve that opens and closes the exhaust port;
an exhaust system that has an exhaust passage, the exhaust passage guiding exhaust gas discharged from the combustion chamber through the exhaust port; and
an air supply system that supplies air;
the exhaust system including:

a convergent portion that is disposed in the exhaust passage and that has a downstream end and an upstream end, a cross-sectional area of a flow passage at the downstream end being smaller than a cross-sectional area of a flow passage at the upstream end;
a divergent portion that is disposed downstream of the convergent portion in the exhaust passage and that has a downstream end and an upstream end, a cross-sectional area of a flow passage at the downstream end being greater than a cross-sectional area of a flow passage at the upstream end; and
a branch portion that allows a shock wave to branch from the exhaust passage upstream of the divergent portion and that allows the shock wave to propagate through the exhaust passage again, the shock wave propagating through the exhaust passage toward a downstream side at higher velocity than exhaust gas that flows into the exhaust passage from the combustion chamber when the exhaust port is opened;
the air supply system including:

a first passage that has a downstream end and an upstream end with the downstream end connected to the exhaust passage upstream of the divergent portion, the first passage having a first reed valve which allows an airflow running from the upstream end to the downstream end to pass through; and
a second passage that has a downstream end and an upstream end with the upstream end connected to the first passage downstream of the first reed valve;
wherein the exhaust system is arranged so that a new shock wave is generated by heightening a pressure of exhaust gas in the convergent portion in such a way that the exhaust gas flowing into the exhaust passage from the combustion chamber passes through the convergent portion and in such a way that the exhaust gas is allowed to collide with a shock wave that has propagated through the branch portion between the branch portion and the divergent portion and by allowing the exhaust gas whose pressure has been heightened to pass through the divergent portion; and
wherein the air supply system is arranged so that air is injected into the first passage through the first reed valve while using a negative pressure generated by the new shock wave in the exhaust passage upstream of the divergent portion and so that the air injected thereinto is supplied to the second passage while using a positive pressure generated in the exhaust passage upstream of the divergent portion.

2. The engine according to claim 1, wherein the first passage and the second passage are arranged so that energy loss of gas flowing through a flow passage ranging from the upstream end of the first passage to the downstream end of the first passage is smaller than energy loss of gas flowing through a flow passage ranging from the downstream end of the second passage to the downstream end of the first passage.

3. The engine according to claim 1, wherein the first passage and the second passage are arranged so that a flow coefficient in the downstream end of the first passage when air is allowed to flow from the upstream end of the first passage to the downstream end of the first passage in a state in which the second passage is closed is greater than a flow coefficient in the downstream end of the first passage when air is allowed to flow from the downstream end of the second passage to the downstream end of the first passage in a state in which the first passage is closed upstream of a connection portion connected with the second passage.

4. The engine according to any one of claim 1 to claim 3, wherein the air supply system further comprises a second reed valve that is disposed in the second passage and through which air flowing from the upstream end of the second passage to the downstream end of the second passage passes.

5. The engine according to any one of claim 1 to claim 4, wherein the branch portion is used also as the first passage.

6. The engine according to any one of claim 1 to claim 5 further comprising an orifice disposed at a place in the first passage between a connection portion through which the first passage and the second passage are connected to each other and the downstream end of the first passage.

7. The engine according to any one of claim 1 to claim 6, wherein the downstream end of the second passage is connected to the exhaust passage.

8. The engine according to claim 7 further comprising a first catalyst disposed in the exhaust passage downstream of the divergent portion, wherein the downstream end of the second passage is connected to the exhaust passage downstream of the first catalyst.

9. The engine according to claim 8, wherein the exhaust system further comprises a second catalyst disposed in the exhaust passage downstream of the downstream end of the second passage.

10. The engine according to claim 7 further comprising a first catalyst disposed in the exhaust passage downstream of the divergent portion, wherein the downstream end of the second passage is connected to the exhaust passage beside the first catalyst.

11. The engine according to claim 10, wherein the first catalyst has an air injection hole in a side surface thereof.

12. The engine according to claim 10 or claim 11, wherein the downstream end of the second passage is connected to the exhaust passage so that air flowing from the second passage is capable of being injected into the first catalyst also from the upstream end of the first catalyst.

13. The engine according to any one of claim 8 to claim 12, wherein oxygen concentration in the second passage is higher than oxygen concentration in the exhaust passage upstream of the first catalyst.

14. A vehicle provided with the engine according to any one of claim 1 to claim 13.

15. A vessel provided with the engine according to any one of claim 1 to claim 13.

FIG. 1

EP 2 511 494 A1

FIG. 2

FIG. 3

FIG. 4A

FIG. 4B

FIG. 4C

FIG. 5

FIG. 6

FIG. 7

FIG. 8

FIG. 9A

EP 2 511 494 A1

FIG. 9B

MASS
FLOW
(kg/s)

0

94

−180
BDC

0
TDCF

180
BDC

360
TDC

540
BDC

COMPRESSION    EXPANSION    EXHAUST    INTAKE GAS
                            GAS

CRANK ANGLE (DEGREE)

FIG. 9C

96b (MEASUREMENT POINT b:
SECOND PASSAGE)

96a (MEASUREMENT POINT a:
FIRST PASSAGE)

96d (MEASUREMENT POINT d:
EXHAUST PASSAGE)

96c (MEASUREMENT POINT c:
EXHAUST PASSAGE)

97

OXYGEN
CONCENTRATION

0.750
0.625
0.500
0.375
0.250
0.125
0.000

−180
BDC

0
TDCF

180
BDC

360
TDC

540
BDC

COMPRESSION    EXPANSION    EXHAUST    INTAKE GAS
                            GAS

CRANK ANGLE (DEGREE)

EP 2 511 494 A1

FIG. 10

EP 2 511 494 A1

FIG. 11

EP 2 511 494 A1

FIG. 12

FIG. 13

FIG. 14

FIG. 15

FIG. 16

EP 2 511 494 A1

EP 2 511 494 A1

FIG. 17A

FIG. 17B

FIG. 17C

FIG. 18

FIG. 19

EP 2 511 494 A1

FIG. 20

FIG. 21

FIG. 22

<table>
<tr><td colspan="2" align="center">**INTERNATIONAL SEARCH REPORT**</td><td>International application No.<br>PCT/JP2010/071488</td></tr>
</table>

A.  CLASSIFICATION OF SUBJECT MATTER
*F01N3/30*(2006.01)i, *B01D53/86*(2006.01)i, *F01N3/22*(2006.01)i, *F01N5/04* (2006.01)i, *F01N13/08*(2010.01)i

According to International Patent Classification (IPC) or to both national classification and IPC

B.  FIELDS SEARCHED

Minimum documentation searched (classification system followed by classification symbols)
F01N3/30, B01D53/86, F01N3/22, F01N5/04, F01N13/08

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2008-31868 A  (Yamaha Marine Co., Ltd.), 14 February 2008 (14.02.2008), paragraphs [0046] to [0048] & US 2008/0022671 A1 | 1-15 |
| A | JP 2004-150310 A  (Honda Motor Co., Ltd.), 27 May 2004 (27.05.2004), paragraphs [0049] to [0051] & CN 1499051 A | 1-15 |
| A | JP 61-155620 A  (Outboard Marine Corp.), 15 July 1986 (15.07.1986), page 6, upper right column, line 1 to lower left column, line 20 & US 4660378 A          & CA 1282292 A | 1-15 |

☒  Further documents are listed in the continuation of Box C.          ☐  See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    08 February, 2011 (08.02.11) | Date of mailing of the international search report<br>    22 February, 2011 (22.02.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/071488

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2009/151135 A1  (Yamaha Motor Co., Ltd.), 17 December 2009 (17.12.2009), all pages; all drawings & US 2010/0180583 A      & US 2010/0192553 A & US 2010/0192556 A      & US 2010/0192557 A & EP 2157296 A1         & EP 2163739 A1 & WO 2009/151136 A1     & WO 2009/151137 A1 & WO 2009/151138 A1     & CN 101680349 A & AP 200905079 D        & AP 200905080 D & AP 200905081 D        & AP 200905082 D & CN 101680347 A        & CN 101680348 A & CN 101688462 A | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006220019 A
- JP 2009281823 A